# EUROPEAN PATENT SPECIFICATION

(11) **EP 4 670 086 B1**
(45) Date of publication and mention of the grant of the patent: **16.09.2026**
(21) Application number: 24813518.8
(22) Date of filing: 06.11.2024
(51) Int. Cl.: G06N 3/0455, G06N 3/084, G06N 3/096, G06N 3/0985, G06F 40/30, G06F 40/40, G06V 10/82

(54) **PARAMETER-EFFICIENT ADAPTER FOR AN ARTIFICIAL INTELLIGENCE SYSTEM**
PARAMETEREFFIZIENTER ADAPTER FÜR EIN SYSTEM DER KÜNSTLICHEN INTELLIGENZ
ADAPTATEUR À PARAMÈTRE EFFICACE POUR UN SYSTÈME D'INTELLIGENCE ARTIFICIELLE

(30) Priority: 10.11.2023 US 202363598033 P; 26.02.2024 US 202418587052
(43) Date of publication of application: 31.12.2025
(73) Proprietor: Mitsubishi Electric Corporation, Chiyoda-ku Tokyo 100-8310 (JP)
(72) Inventor: LIU, Jing, Cambridge, Massachusetts 02139-1955 (US); AKINO, Toshiaki, Cambridge, Massachusetts 02139-1955 (US); WANG, Pu, Cambridge, Massachusetts 02139-1955 (US); BRAND, Matthew, Cambridge, Massachusetts 02139-1955 (US); WANG, Ye, Cambridge, Massachusetts 02139-1955 (US); PARSONS, Kieran, Cambridge, Massachusetts 02139-1955 (US)
(74) Representative: Pfenning, Meinig & Partner mbB
(86) International application number: PCT/JP2024/080192
(87) International publication number: WO 2025/100557

(56) References cited:
- WANG YAQING ET AL: "AdaMix: Mixture-of-Adaptations for Parameter-efficient Model Tuning", PROCEEDINGS OF THE 2022 CONFERENCE ON EMPIRICAL METHODS IN NATURAL LANGUAGE PROCESSING, 2 November 2022 (2022-11-02), pages 5744 - 5760, XP093229492, Retrieved from the Internet <URL:https://arxiv.org/pdf/2205.12410> [retrieved on 20250210], DOI: 10.18653/v1/2022.emnlp-main.388
- HU EDWARD ET AL: "LORA: LOW-RANK ADAPTATION OF LARGE LAN- GUAGE MODELS", 16 October 2021 (2021-10-16), pages 1 - 26, XP055945798, Retrieved from the Internet <URL:https://arxiv.org/pdf/2106.09685.pdf> [retrieved on 20220725]
- HAMISH IVISON ET AL: "Hyperdecoders: Instance-specific decoders for multi-task NLP", ARXIV.ORG, CORNELL UNIVERSITY LIBRARY, 201 OLIN LIBRARY CORNELL UNIVERSITY ITHACA, NY 14853, 24 May 2022 (2022-05-24), XP091218064

## Description

### [Technical Field]

The present disclosure relates generally to training and use of machine learning systems for data processing such as natural language processing, and more particularly to an adapter and a method for parameter-efficient fine-tuning of pre-trained neural network models.

### [Background Art]

Recent advancements in artificial intelligence (AI) systems, especially on natural language processing, have been marked by the development of large language models (LLMs), such as Generative Pre-Trained Transformer (GPT) series, LLaMA2, etc. These large language models, trained on vast and diverse corpora, exhibit remarkable capabilities in understanding and generating human-like text across a wide range of domains. These LLMs find their potential applications across various industries. Examples of these industries may include, but are not limited to, technology and information technology (IT), healthcare, legal, finance, marketing and advertising, e-commerce, education, human resources, telecommunications, energy and utilities, and automotive sector. For example, the LLMs may find applications in content generation, translation services, question answering systems, chatbot, virtual assistants, sentiment analysis, etc.

However, sizes of the LLMs have been growing at an unprecedented rate. For example, current LLMs may have parameter counts in an order of hundreds of billions or even trillions, necessitating massive amounts of computational resources for training and inference. To reduce training time and computational resources as well as to improve efficiency, pre-trained models are used to carry out tasks. While pre-trained LLMs exhibit remarkable performance across a wide array of general tasks, their generic nature poses challenges when applied to domain-specific contexts. For example, the pre-trained models may not sufficiently capture the nuances, terminology, or context specific to certain domains, leading to suboptimal performance. The need for fine-tuning arises from a recognition that customization is required to adapt the pre-trained models to the idiosyncrasies, vocabulary, and specific requirements of particular domains.

For domain-specific tasks, the performance of the Pre-trained Language Models (PLMs) can be significantly improved by fine-tuning on domain-specific data. Therefore, fine-tuning PLMs for domain-specific tasks has become a de facto procedure. However, full fine-tuning of LLMs is still very computationally intensive and expensive. For instance, fine-tuning a 65 billion-parameter model may require more than 780 GB of memory for graphic processing unit (GPU). In addition to LLMs, recent AI architectures such as vision transformer (ViT) models and latent diffusion models require a massive number of trainable parameters to achieve high-quality data processing in variational applications such as video processing and image generation.

In certain cases, parameter-efficient fine-tuning (PEFT) techniques may be used in scenarios where computational resources or labeled task-specific data are limited. The PEFT techniques may enable to strike a balance between the knowledge encoded in pre-trained models and adapting to the specifics of a target task/domain with a reduced number of trainable parameters. For example, PEFT techniques only fine-tune a small set of parameters, which may be a subset of the existing parameters of the pre-trained models or a set of newly added parameters, thereby greatly reducing the computational and memory costs. PEFT techniques also allow to store only a small number of model parameters for domain adaptation in addition to the pre-trained model. To this end, for multiple downstream tasks, PEFT techniques greatly save storage, while the full fine-tuning is needed to generate a new large model for each downstream task. Besides parameter savings, PEFT makes it possible to quickly adapt to new tasks without catastrophic forgetting or overfitting, which has been often observed during the full fine-tuning of AI models.

While PEFT offers advantages in scenarios with limited computational resources or labelled task-specific data, there are some drawbacks and challenges associated with this approach. A key drawback of the PEFT techniques is limited task-specific adaptation. For example, even though the PEFT techniques update a pre-trained model in an intrinsic low dimension for domain adaptation, such domain adaptation may not be well captured by the parameters in the low rank. Therefore, if limited parameters in the reduced linear subspace do not align well with the target domain, the update or fine-tuning of the pre-trained model with the limited parameter updates may result in suboptimal performance.
Wang Yaqing ET AL: "AdaMix: Mixture-of-Adaptations for Parameter-efficient Model Tuning", 1 January 2022 disclosesa a general parameter-efficient fine-tuning (PEFT) method, which introduces a mixture of adaptation modules-such as adapters or low-rank matrices-into each Transformer layer.

### [Summary of Invention]

The invention is set forth in the independent claims and further embodiments are defined in the dependent claims. The present disclosure relates to an adapter, a method and a computer program product for fine-tuning a pre-trained artificial intelligence models, such as LLM, for domain-specific tasks.

Some embodiments of the present disclosure are based on a recognition that while pre-trained AI models such as LLMs provide a strong foundation for various tasks such as language translation, the need for fine-tuning arises from a necessity of customization for effective deployment of the AI models in diverse and specialized domains. To this end, the present disclosure provides a novel approach for fine-tuning a model, specifically addressing the challenges associated with adapting large AI models to domain-specific contexts.

In particular, the large size of LLMs is primarily attributed to complexity and scale of the architecture of the LLMs, as well as the vast amount of training data used during the pre-training phase. For example, the LLMs have a deep and complex structure, especially the LLMs based on transformer architectures. In particular, the transformer architecture-based LLMs consist of multiple layers of attention mechanisms, each containing a large number of parameters. The depth and complexity of the AI architecture contribute to the overall size of the model. Moreover, the number of parameters in an LLM is a key factor influencing its size and capacity. Although the large number of parameters allow the model to capture intricate patterns, relationships, and nuances in the training data, enhancing its ability to understand and generate natural language.

Some embodiments are based on a recognition that parameter-efficient fine-tuning is crucial due to the enormous size of LLM. While the large size of LLMs contributes to their performance on a variety of language tasks, it also presents challenges such as increased computational requirements during training and inference, higher memory consumption, and potential limitations in deployment on resource-constrained devices.

Some embodiments of the present disclosure are based on a recognition that PEFT techniques can be employed for fine-tuning LLMs for domain adaptation. Parameter-efficient fine-tuning refers to a process of adapting a pre-trained neural network model, such as an LLM to a specific task/domain while efficiently managing and updating a limited set of parameters. The use of PEFT for fine-tuning approach is particularly relevant when computational resources or labelled task-specific data are constrained, and it aims to achieve effective fine-tuning with a reduced number of parameters. In certain cases, PEFT may enable to provide better results than full fine-tuning.

However, in certain cases, the reduced number of parameters used for adapting an LLM for a specific domain may result in limited task-specific or domain-specific adaptation. In an example, if the pre-trained LLM does not align well with a target task or a target domain, the limited parameter updates may result in suboptimal performance.

Some embodiments are based on a recognition that many PEFT techniques have been proposed. In one example, prefix tuning and prompt tuning techniques may be used to prepend certain tunable prefix tokens to the input or hidden layers and only train soft prompts during fine-tuning. In another example, adapter tuning techniques may be used to insert and tune small neural modules called adapters to some layers of a PLM.

Some embodiments are based on a recognition that an adapter tuning technique based on Low-Rank Adaptation (LoRA) demonstrates performance comparable to full fine-tuning, despite having significantly fewer trainable parameters. In an example, LoRA may use low-rank decomposition matrices to approximate a parameter update of a weight matrix of a dense layer of a pre-trained model. In an example, the adapter tuning technique may update query and value projection matrices of a transformer architecture of a pre-trained model.

In particular, LoRA is motivated by intrinsic low-dimensional task adaptation hypothesis. For example, LoRA assumes that a change in weights during model adaptation has a low intrinsic rank forming a subspace, leading to the LoRA approach. Therefore, for a dense layer of a PLM, its original weight parameters, say, *W*, is frozen. Further, during fine-tuning, LoRA uses low-rank decomposition matrices, say *A* and *B* to constrain a weight update Δ*W = AB.* In particular, a rank, *r*, of the weight update of the decomposition matrices is typically set to be very small compared to the pre-trained weight parameters *W.* As a result, the rank of weight parameters in *A* and *B* are significantly less than that of the original *W*. Hence, it leads to low-memory and low-power consumption for fine-tuning.

Further, after the fine-tuning of the dense layer of the PLM using LoRA a mapping from an input to the update of the PLM is a low-rank (i.e., *r-*dimensional) linear mapping.

Some embodiments of the present disclosure are based on a recognition that the domain-specific update may not be well captured by the linear low-rank adaptation, or the linear low-rank mapping in LoRA. The intrinsic low-dimensional task adaptation hypothesis does not strictly restrict the intrinsic dimension should lie in a linear subspace.

Further, some embodiments are based on a recognition that a more general low-dimensional adaptation *f*(*x*) may accurately capture domain-specific adaptation of the PLM in its update.

Subsequently, it is an objective of the present disclosure to generalize LoRA from a low-rank linear adaptation/mapping to low dimensional, non-linear adaptation/mapping, called Low-Dimensional Adaptation (LoDA). It is another objective of the present disclosure to further improves the expressiveness of non-linear adaptation while using a substantially smaller or same number of tunable parameters as LoRA. It is yet another objective of the present disclosure to provide techniques to improve computational efficiency at inference by replacing a pre-trained weight matrix by its low-rank, quantization, or sparse approximation.

The primary objective of the present disclosure is to enhance the utility of large AI models such as LLMs by tailoring them to specific domains, industries, or applications. This customization aims to optimize the model's understanding and generation of useful data such as image/video/text/audio within the defined context, ensuring superior performance in tasks relevant to the target domain.

Accordingly, in one aspect, an adapter to a base model of an artificial intelligence (AI) system is provided. The adapter comprises a connector, a non-linear modifier, and an AI trainer. The connector is configured to connect the adapter to the base model such that during an operation of the AI system at least some portion of data transformed by the base model is propagated from the base model to the adapter and back from the adapter to the base model. The non-linear modifier is configured to modify the data received from the base model non-linearly before returning the modified portion of the data back to the base model. Further, the AI trainer is configured to tune the non-linear modifier of the adapter by propagating training data through the base model and the adapter and updating weights of the non-linear modifier of the adapter for given weights of the base model to optimize a loss function.

According to additional embodiments, the non-linear modifier includes multiple paths formed by multiple AI architectures of data transformation, each of the paths is either a linear path configured to modify the received data linearly or a non-linear path configured to modify the received data non-linearly. In an example, an AI architecture of the linear path modifies the received data linearly using one or multiple weight matrices. Moreover, an AI architecture of the non-linear path modifies the received data linearly using one or multiple weight matrices and modifies the received data non-linearly using one or multiple non-linear functions. In addition, the non-linear modifier includes at least one non-linear path.

According to additional embodiments, the non-linear modifier includes multiple non-linear paths using different non-linear functions, different arrangements of the same non-linear functions with respect to the weight matrices, or both.

According to additional embodiments, the non-linear modifier includes at least one linear path.

According to additional embodiments, the multiple non-linear paths include the same weight matrices.

According to additional embodiments, the multiple non-linear paths share at least some weights.

According to additional embodiments, the weights in the weight matrices of the multiple non-linear paths come from a common pool of parameters, such that to tune the non-linear modifier, the AI trainer updates the common pool of parameters.

According to additional embodiments, the non-linear modifier comprises a path splitter configured to direct the received data to each of the paths, and a path combiner configured to combine outputs of each of the paths to submit a combined output back to the base model.

According to additional embodiments, the path combiner combines the outputs using an operation. The operation includes one or a combination of an identity, a duplication, a permutation, a polynomial basis expansion, a Fourier basis expansion, an addition, a multiplication, a division, a subtraction, a modulo-addition, a modulo-product, a Kronecker product, a Kronecker sum, a Hadamard product, a concatenation, a log-sum-exp, an affine transform, a convolution, randomization, a normalization, a nonlinear activation operation, and variants thereof.

According to additional embodiments, the operation of the path combiner includes a parameter learned during the tuning of the AI trainer.

According to additional embodiments, the AI architecture of the non-linear path includes a bottleneck configuration of multiple layers.

According to additional embodiments, the AI trainer is further configured to approximate the base model and train the adapter and to achieve a common objective.

According to additional embodiments, the AI trainer further comprises a weight constructor comprising a pool of parameters and a set of hyperparameters forming rules of propagation of the parameters from the pool of parameters into the weight matrices of the multiple paths of the non-linear modifier. The weight constructor is configured to update the pool of parameters and the set of hyperparameters for given weights of the base model, and propagate the parameters from the pool of parameters to different weight matrices of different paths according to the trained hyperparameters.

According to additional embodiments, the AI trainer updates weights of the adapter for frozen weights of the base model.

According to additional embodiments, weight matrices of the adapter have lower dimensions than weight matrices of the base model.

According to additional embodiments, weight matrices of the adapter are coming from a pool of parameters updated by the AI trainer during the tuning, and wherein the number of parameters in the pool of parameters is more than 1000 times less than a number of parameters of the base model.

In another aspect, a method for adapting a base model of an AI system using an adapter is provided. The method comprises connecting, using a connector of the adapter, the adapter to the base model such that during an operation of the AI system at least some portion of data transformed by the base model is propagated from the base model to the adapter and back from the adapter to the base model. The method further comprises modifying, using a non-linear modifier of the adapter, the data received from the base model non-linearly before returning the modified portion of the data back to the base model. The method further comprises tuning, using an AI trainer of the adapter, the non-linear modifier of the adapter by propagating training data through the base model and the adapter and updating weights of the non-linear modifier of the adapter for given weights of the base model to optimize a loss function.

In yet another aspect, a non-transitory computer readable storage medium embodied thereon a program executable by a processor for performing a method. The method comprises connecting an adapter to a base model of an AI system such that during an operation of the AI system at least some portion of data transformed by the base model is propagated from the base model to the adapter and back from the adapter to the base model. The method further comprises modifying the data received from the base model non-linearly before returning the modified portion of the data back to the base model. The method comprises tuning the non-linear modifier of the adapter by propagating training data through the base model and the adapter and updating weights of the non-linear modifier of the adapter for given weights of the base model to optimize a loss function.

Accordingly, the present disclosure can realize high-quality, low-memory, low-power consumption computation for fine-tuning AI models, and also for the use of the fine-tuned AI models at inference time, even for the case when the available size of training data is limited in the target domain. By generalizing the linear LoRA framework towards nonlinear subspace, the capacity to capture target domain specifics can be improved without increasing the required number of trainable parameters. Further, the weight constructor based on hypernetwork can seamlessly adjust the varying non-uniform dimensionality required at different layers and components of base models, by treating multiple weight matrices at once from a pool of parameters. In addition, further power reduction for AI systems is realized by approximated weight for base model and adaptors through the use of low-rank approximation, quantization, and sparse pruning.

The presently disclosed embodiments will be further explained with reference to the attached drawings. The drawings shown are not necessarily to scale, with emphasis instead generally being placed upon illustrating the principles of the presently disclosed embodiments.

### [Brief Description of Drawings]

[Fig. 1]

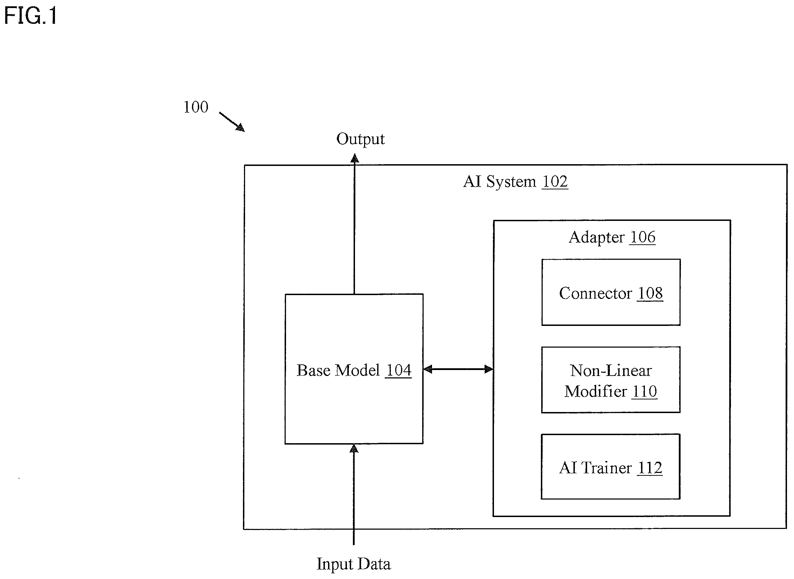

   FIG. 1 illustrates a block diagram of an AI system in which an adapter is implemented, according to some example embodiments.
[Fig. 2]

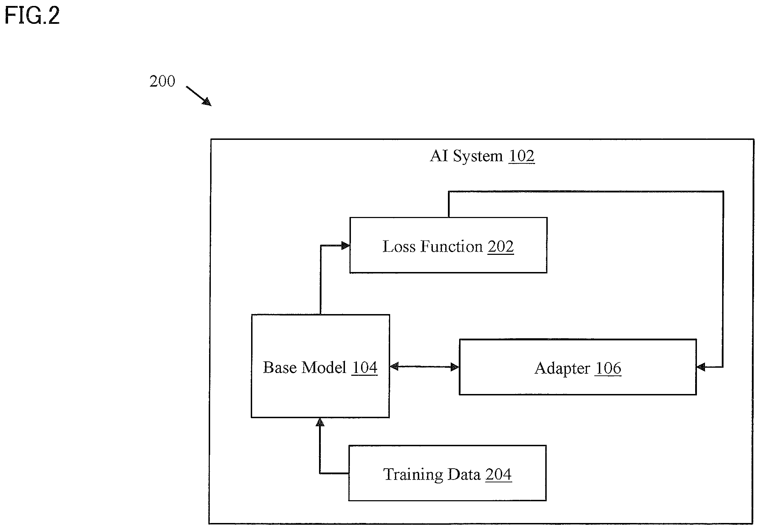

   FIG. 2 illustrates a block diagram of the AI system in which the adapter is trained for fine-tuning, according to some example embodiments.
[Fig. 3A]

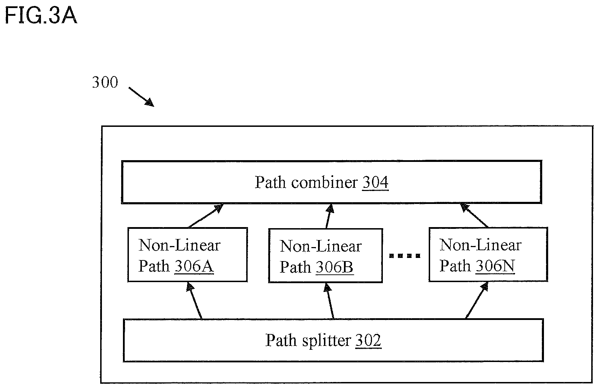

   FIG. 3A illustrates block diagram of an example non-linear modifier of the adapter, according to some example embodiments.
[Fig. 3B]

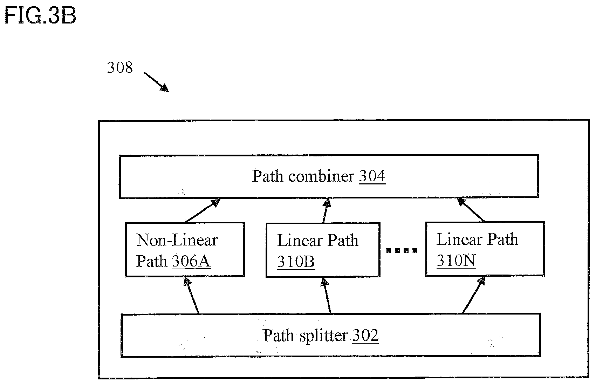

   FIG. 3B illustrates block diagram of an example non-linear modifier of the adapter, according to some example embodiments.
[Fig. 4]

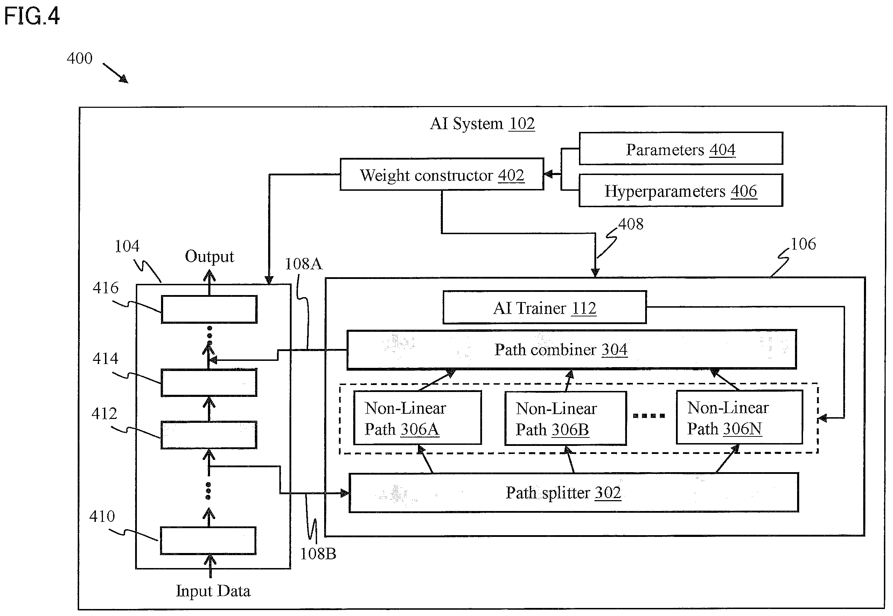

   FIG. 4 illustrates a high-level block diagram of the AI system in which the adapter is trained for fine-tuning, according to some example embodiments.
[Fig. 5]

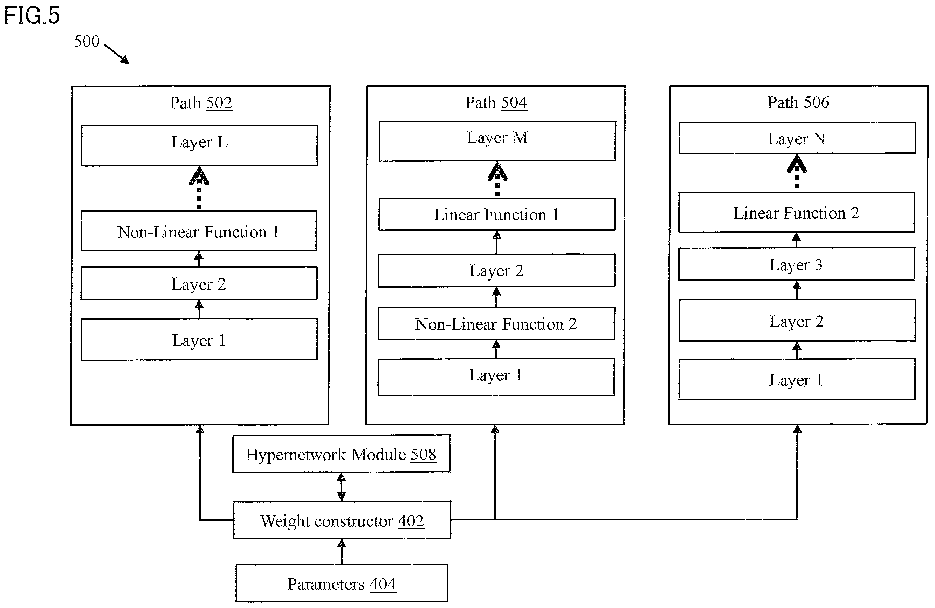

   FIG. 5 illustrates a block diagram of paths of the non-linear modifier for forward propagation, according to some example embodiments.
[Fig. 6]

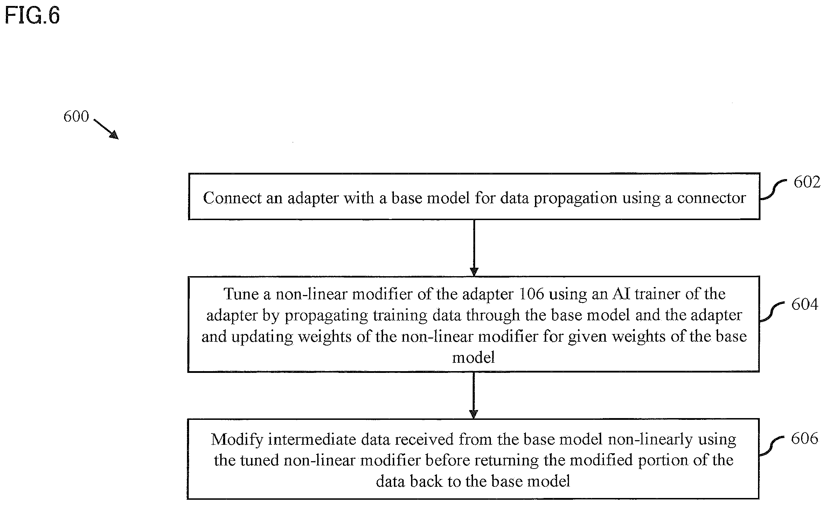

   FIG. 6 illustrates an example flowchart of a method for adapting the base model of the AI system using the adapter, according to some embodiments of the present disclosure.
[Fig. 7A]

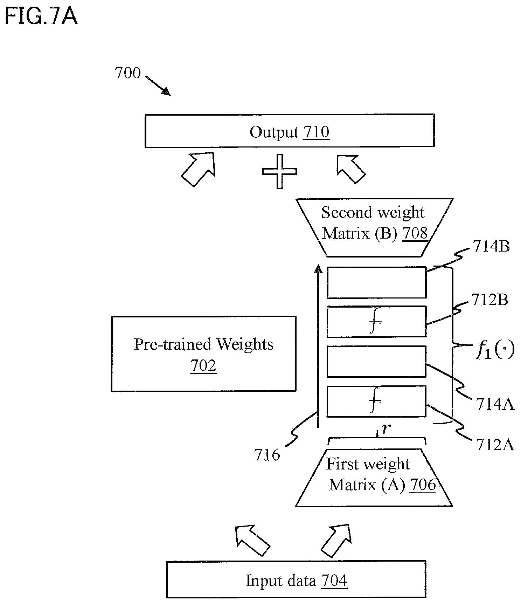

   FIG. 7A illustrates block diagram of a LoDA architecture of the non-linear modifier, according to different embodiments of the present disclosure.
[Fig. 7B]

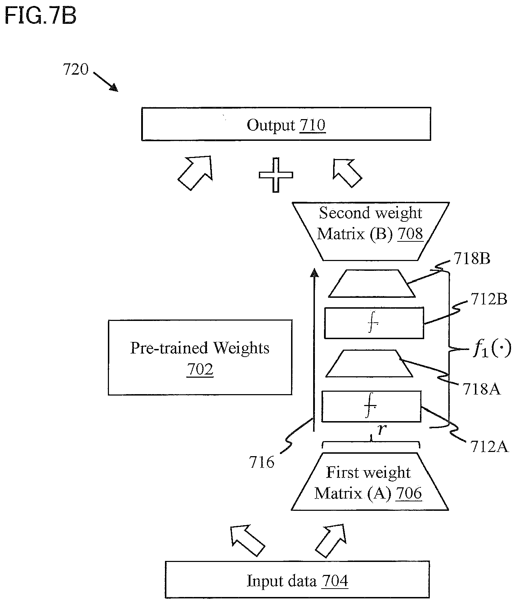

   FIG. 7B illustrates block diagram of a LoDA architecture of the non-linear modifier, according to different embodiments of the present disclosure.
[Fig. 8]

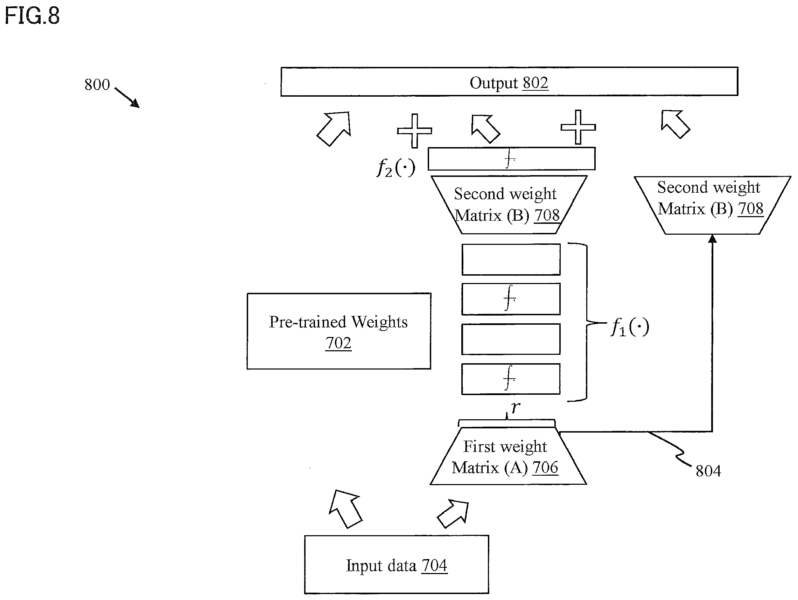

   FIG. 8 illustrates a block diagram of an advanced low-dimension adaptation (LoDA+) architecture of the non-linear modifier, according to different embodiments of the present disclosure.
[Fig. 9]

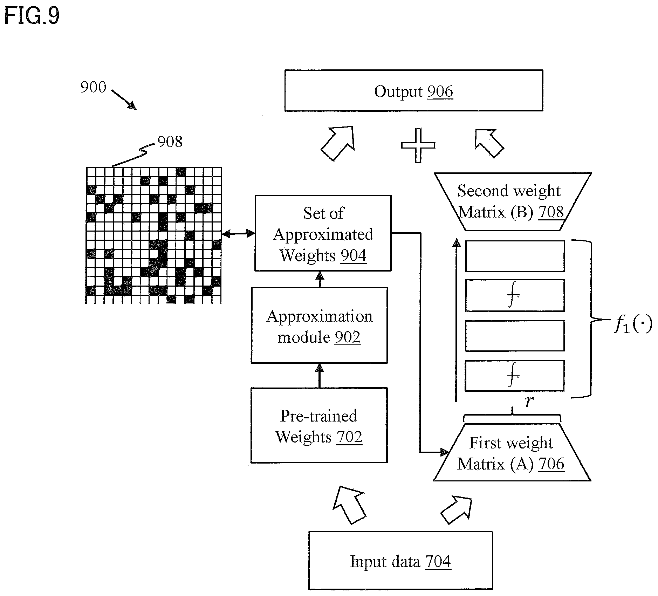

   FIG. 9 illustrates a block diagram of a sparsified low-dimension adaptation (S-LoDA (+)) architecture of the non-linear modifier, according to some embodiments of the present disclosure.
[Fig. 10]

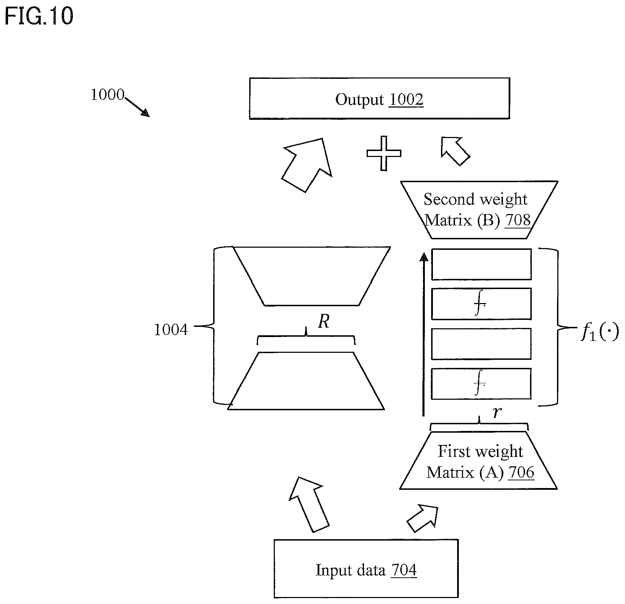

   FIG. 10 illustrates a block diagram of a low-rank low-dimension adaptation (R-LoDA (+)) architecture of the non-linear modifier, according to some embodiments of the present disclosure.
[Fig. 11]

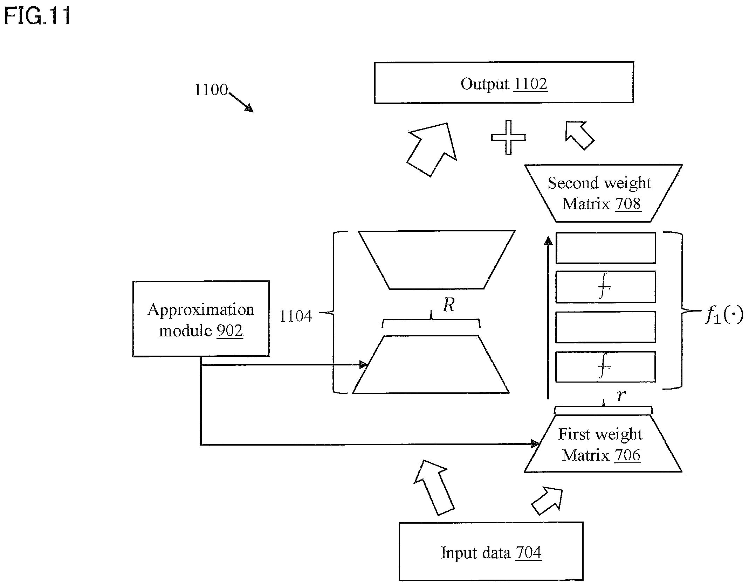

   FIG. 11 illustrates a block diagram of a low-rank approximation architecture for the non-linear modifier, according to some embodiments of the present disclosure.
[Fig. 12]

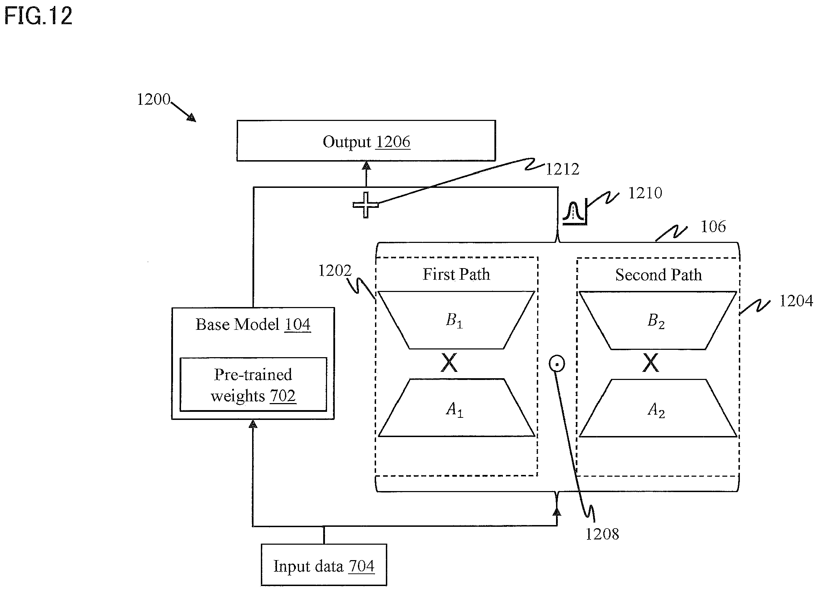

   FIG. 12 illustrates a block diagram of an example architecture of the AI system, according to some embodiments of the present disclosure.
[Fig. 13]

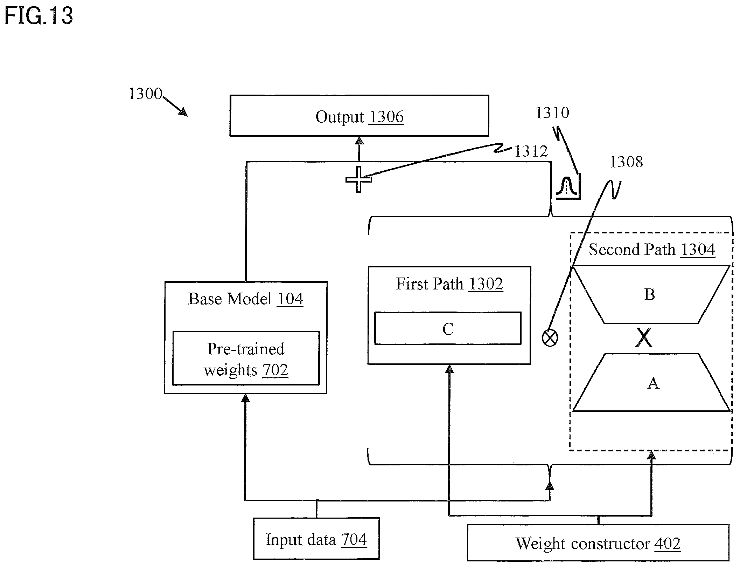

   FIG. 13 illustrates a block diagram of an example architecture of the AI system, according to some embodiments of the present disclosure.
[Fig. 14]

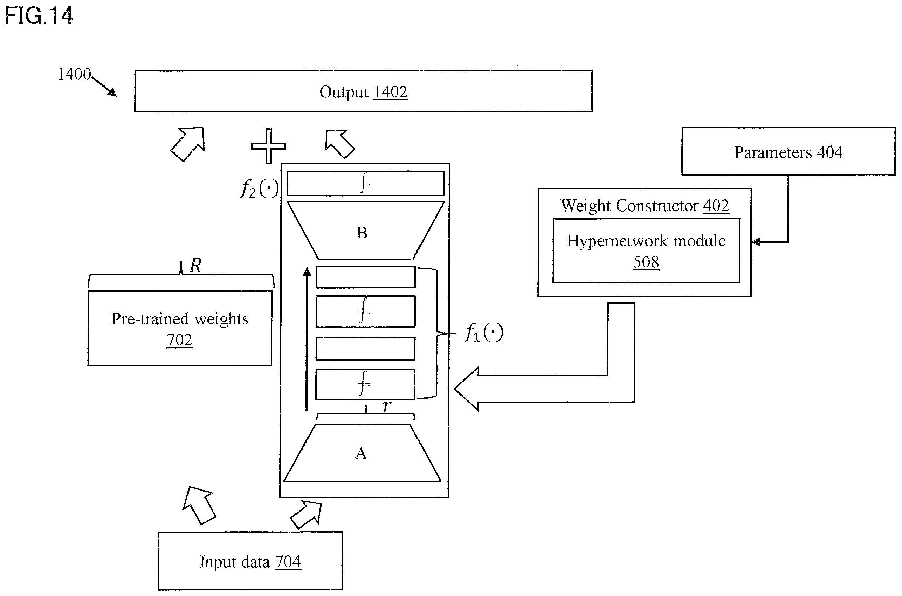

   FIG. 14 illustrates a block diagram of the non-linear modifier implemented using HyperLoDA architecture, according to some embodiments of the present disclosure.
[Fig. 15A]

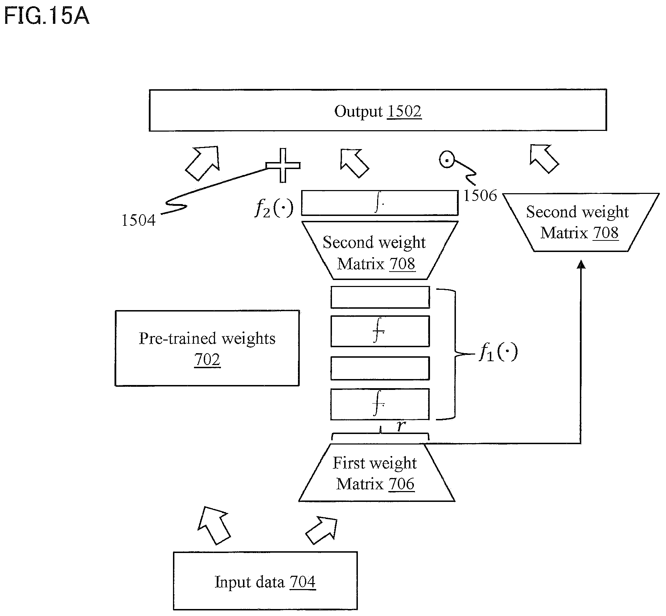

   FIG. 15A illustrates different operations of path combiner, according to various embodiments of the present disclosure.
[Fig. 15B]

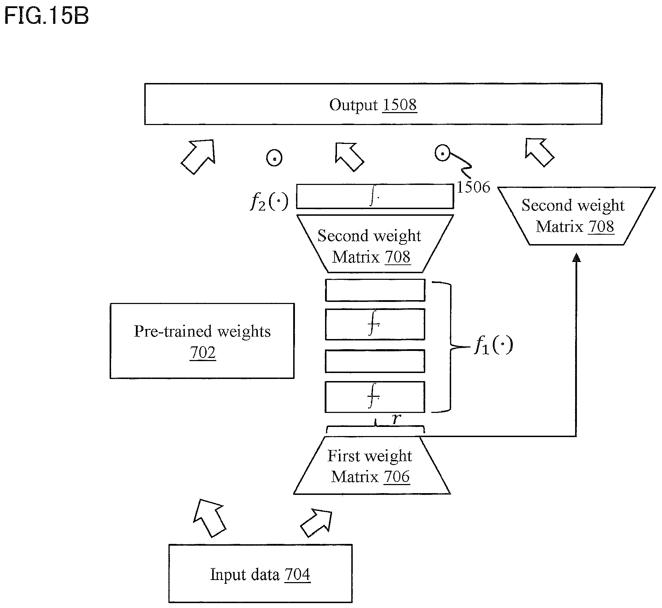

   FIG. 15B illustrates different operations of path combiner, according to various embodiments of the present disclosure.
[Fig. 15C]

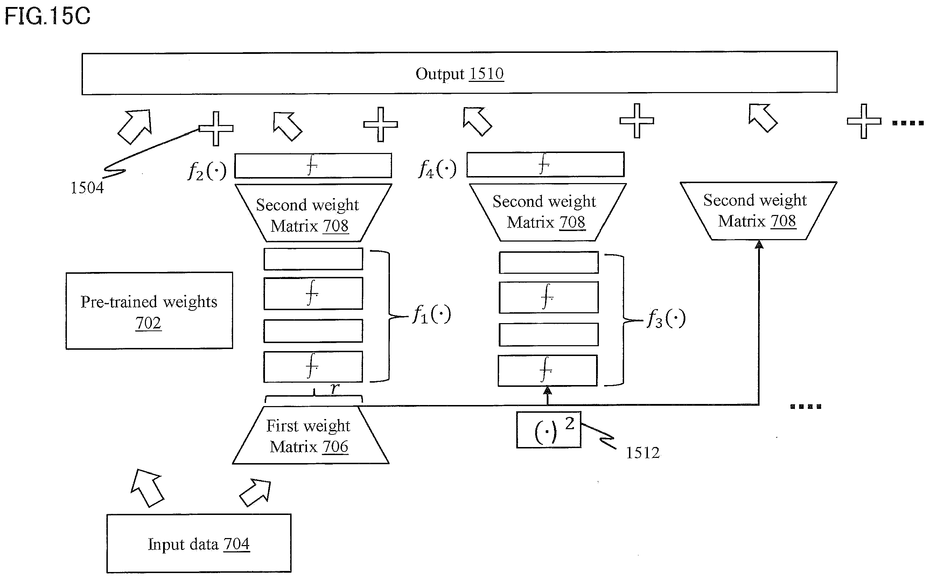

   FIG. 15C illustrates different operations of path combiner, according to various embodiments of the present disclosure.
[Fig. 15D]

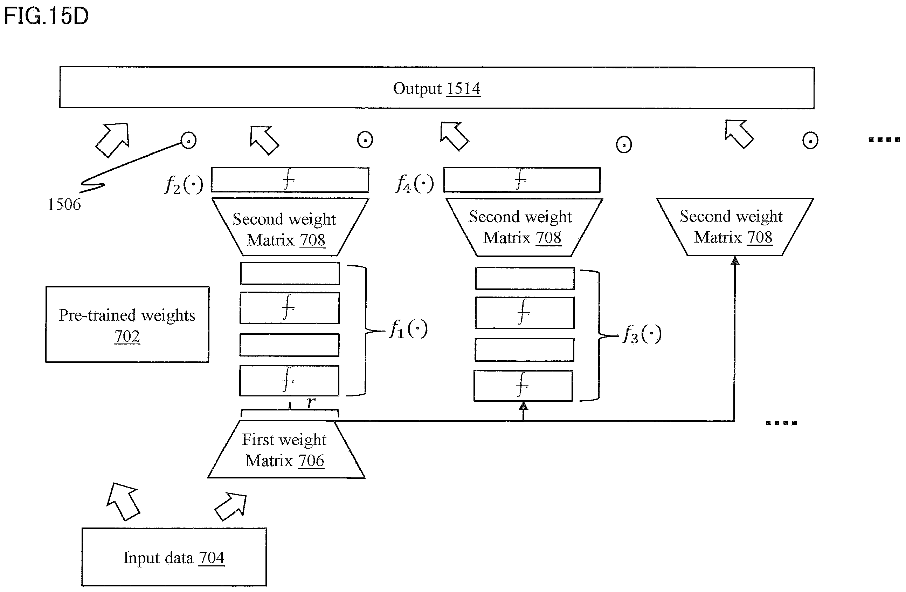

   FIG. 15D illustrates different operations of path combiner, according to various embodiments of the present disclosure.
[Fig. 15E]

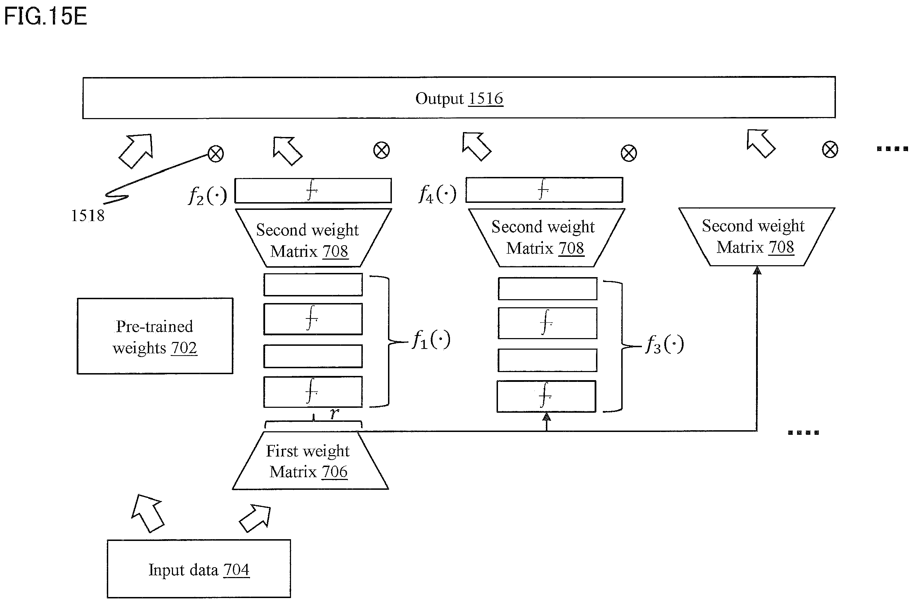

   FIG. 15E illustrates different operations of path combiner, according to various embodiments of the present disclosure.
[Fig. 15F]

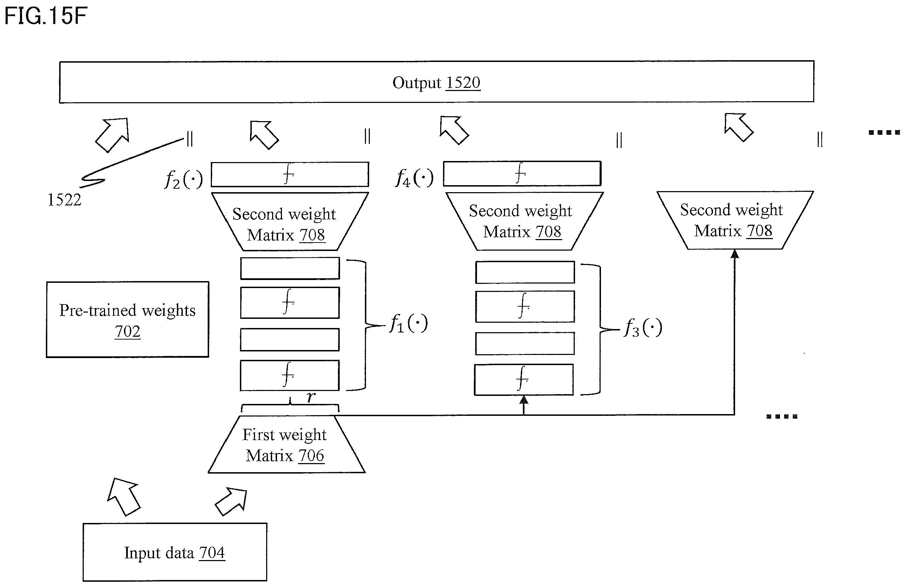

   FIG. 15F illustrates different operations of path combiner, according to various embodiments of the present disclosure.
[Fig. 16]

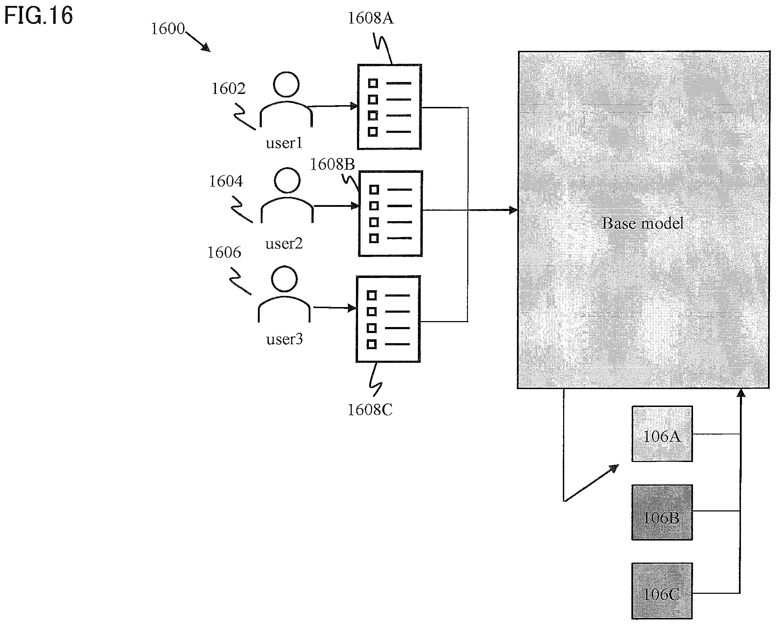

   FIG. 16 illustrates an example schematic illustration of different downstream tasks for a base model fine-tuned using an adapter, according to some embodiments of the present disclosure.
[Fig. 17]

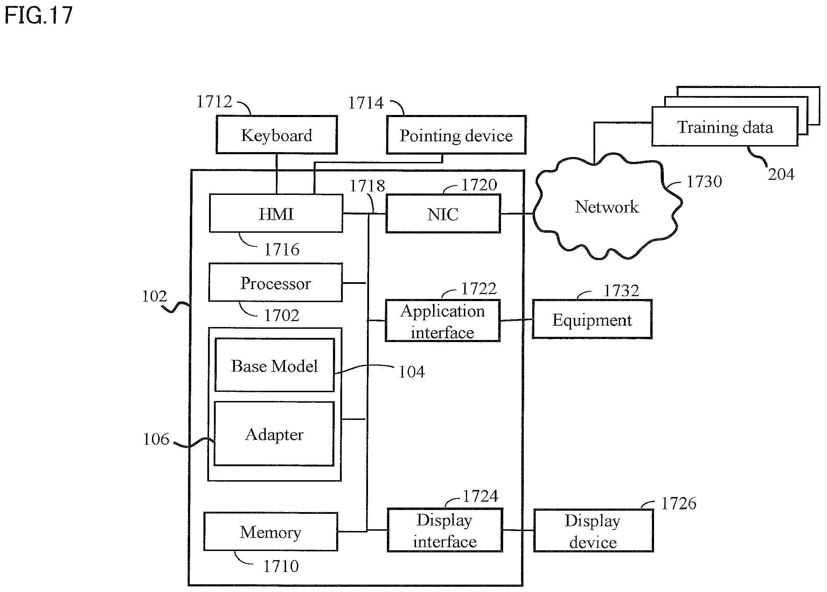

   FIG. 17 shows a block diagram of the AI system for adapting the base model using the adapter for downstream tasks in target domains, according to some embodiments.

### [Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, systems and methods are shown in block diagram form only in order to avoid obscuring the present disclosure.

Throughout the present disclosure, the term "AI system" refers to a computer-based system or software that exhibits characteristics commonly associated with human intelligence. The AI system is designed to perform tasks that typically require human intelligence, such as problem-solving, learning, reasoning, perception, understanding natural language, and decision-making. AI systems can range from simple rule-based programs to sophisticated, self-learning systems.

Pursuant to present disclosure, the AI system may be a sophisticated piece of software that leverages natural language processing (NLP) and machine learning techniques to understand, generate, and manipulate human language. For example, the AI system is an LLM system that is specifically designed for tasks related to language understanding and generation on a large scale. Certain characteristics of the LLM-based AI system may include, but are not limited to, natural language understanding, text generation, semantic understanding, transfer learning, multimodal capabilities, continuous learning and user interaction. In an example, the AI system for language processing may be implemented using GPT, Bidirectional Encoder Representations from Transformers (BERT), and the like.

Further, a LLM is a type of AI model specifically designed to understand, generate, and manipulate human language on a large scale. LLMs may leverage machine learning techniques, particularly those based on deep learning architectures, to process and comprehend natural language. LLMs have gained prominence for their ability to perform a wide range of language-related tasks, including natural language understanding, text generation, translation, summarization, and more. Typically, LLMs are characterized by a vast number of parameters, often ranging from tens of millions to billions. The large parameter count allows these models to capture complex language patterns and relationships during training.

In an example, the LLMs are considered to be built on transformer architecture, however, this should not be construed as a limitation. For example, the transformer architecture effectively captures long-range dependencies and contextual information in language. Moreover, the transformer architecture may use attention mechanisms to weigh the importance of different parts of an input sequence. In addition, the LLMs may employ bidirectional processing, allowing the models to consider context from both directions when analyzing a sequence of words. This bidirectional approach enhances the model's understanding of the context in which words appear. In an example, the LLMs may generate contextual representations of words, meaning that the representation of a word is influenced by its surrounding context. This enables the model to capture the meaning of words in different contexts.

Recently, the use of LLMs has increased manifold for a variety of language-related tasks, such as sentiment analysis, text classification, question answering, machine translation, summarization, and conversational agents. Due to the large number of parameters, training of LLMs from scratch is a time consuming and expensive process, and therefore, not preferable. To address this problem, pre-trained LLMs are used for generic tasks. For example, LLMs are typically pre-trained on extensive and diverse datasets containing a wide variety of text from the internet. Pre-training involves exposing the model to a broad range of language patterns, allowing it to learn general linguistic features. However, for performing domain-specific tasks, adaptation of LLMs for the particular domain needs to be performed. In one example, LLMs may leverage transfer learning where the model is pre-trained on a large corpus of data and then fine-tuned for specific tasks or domains. This approach enables the model to transfer the knowledge gained during pre-training to various downstream applications.

It may be noted, a base model in an LLM refers to a pre-trained model that has been trained on a large corpus of data for a general natural language understanding and generation task. The pre-trained model serves as a foundation for capturing broad linguistic patterns and knowledge from diverse sources. For example, in the context of pre-trained transformers, a base model is pre-trained on a massive dataset to predict the next word in a sequence, effectively learning grammar, context, and semantics from diverse language patterns.

In an example, the base model contains a large number of parameters and exhibits a high level of language understanding, making it a powerful starting point for a variety of natural language processing tasks. While the base model is pre-trained on a large corpus of general language data, fine-tuning or adapting the base model for specific tasks or domains enhances its performance and makes it more suitable for targeted applications.

Besides above-mentioned natural language processing applications, the base model used for the AI systems in the present disclosure is based on other architecture rather than LLMs depending on applications. The base model uses vision transformer (ViT) which has a large number of trainable parameters to understand image/video data.

Continuing further, an adapter refers to a smaller and task-specific module added to the base model to adapt the base model for a particular task or domain. The adapter includes a lightweight set of parameters that is trained on task-specific data while keeping all or majority of the base model's parameters frozen. In particular, the adapter is used to fine-tune the base model for a specific downstream task without extensively modifying its pre-trained parameters. This approach is beneficial when computational resources or labelled task-specific data are limited.

In an example, an architecture of the adapter is designed to be modular and easily pluggable, allowing the incorporation of multiple adapters for different tasks without significantly modifying the original pre-trained base model. In certain cases, an adapter may be plugged to another adapter for further fine-tuning of the base model for a particular domain or task.

In an example, the architecture of an adapter is designed to facilitate an efficient adaptation of a pre-trained base model to specific tasks or domains. For example, elements of the architecture of the adapter enable the AI system to leverage the knowledge encoded in the base model while efficiently fine-tuning for diverse applications. The design choices for the architecture of the adapter may depend on specific goals of the task, the available data, and computational constraints.

Pursuant to the present disclosure, the architecture of the adapter includes a non-linear modifier to modify data received from the base model non-linearly before returning the modified data back to the base model. In particular, the non-linear modifier includes multiple paths formed by multiple AI architectures of data transformation. The multiple paths in the adapter reflect the modular nature of the architecture of the adapter. For example, the modular design allows for efficient transfer learning, as the multiple paths of the adapter can be easily added or removed for different tasks without extensively modifying the underlying structure of the pre-trained base model. The paths in the architecture of the adapter contribute to overall flexibility, efficiency, and adaptability of the AI system.

In particular, the term "path" refers to a separate computational AI architecture forming a neural network within the architecture of the adapter. The AI architecture of the path facilitates task-specific adaptation of the base model. The path may allow for deep learning for the incorporation of task-specific information. In an example, the multiple paths of the non-linear modifier of the adapter refer to separate or interlinked computational paths formed by AI architectures that branch off from the base model.

According to one example, the AI architecture of a path may include a corresponding set of layers that are responsible for adapting data or features extracted from the base model to the requirements of a particular downstream task. Moreover, the set of layers may be interconnected forming multiple connections. Typically, the set of layers of a path may include linear transformation functions, activation functions, and other operations. These set of layers including the linear transformation functions may form the AI architecture for linear path. In other words, the multiple paths of the adapter may include one or more linear paths that includes one or more linear transformation functions for transforming data extracted from the base model linearly. In particular, an AI architecture of the linear path(s) modifies the data linearly using one or multiple weight matrices associated with the corresponding set of layers.

Pursuant to the present disclosure, the non-linear modifier of the adapter includes at least one non-linear path. In particular, the multiple paths of the adapter include one or more non-linear paths, that includes one or more non-linear transformation functions for transforming data extracted from the base model non-linearly. To this end, the set of layers for the one or more non-linear paths may include non-linear transformation functions, activation functions, normalization functions, and other operations. Moreover, the non-linear paths or the set of layers of each non-linear paths may modify the data received from the base model linearly using one or multiple weight matrices and modifies the received data non-linearly using one or multiple non-linear functions.

The set of layers of each of the multiple paths, i.e., linear paths and non-linear paths, includes parameters, such as weights, biases, and other learnable parameters associated with the corresponding layers. During fine-tuning or adaptation, these parameters are adjusted to specialize the base model for the specific task or domain targeted by the adapter.

Pursuant to present disclosure, the terms "weights," "weight matrices," and "parameters" refer to components that are learned during the training process of the adapter. In particular, the term "parameters" refers to variables that the adapter learns during training. These variables include weights, biases, and other learnable components. Parameters define the behavior of the adapter and are adjusted through optimization algorithms to minimize a difference between predicted and actual outcomes. For example, the parameters for the adapter may include weights that are common between both the base model and the adapter layers, or specific weights that are to be trained for domain-specific adaptation. The goal during training and fine-tuning is to find optimal values for these parameters that allow the adapter and the base model to perform well on target or domain-specific tasks.

Further, "weights" refer to parameters that determine a strength and a direction of connections between artificial neurons or nodes in different layers of each of the multiple paths. These weights are learned during the training phase and play a crucial role in how information flows through the AI architecture of the paths. For example, weights are adjusted during training to minimize a difference between a predicted output and an actual target value. Learning the appropriate weights allows the AI architecture of the paths to capture patterns and relationships in the data.

Moreover, "weight matrices" refer to organized collections of weights for a particular path from the multiple paths in the adapter, or for different layers of a path. In an example, weight matrices specifically refer to one or more weights associated with a particular path or asset of layers of the particular path. In an example, each of the multiple paths may have their own weight matrix or weight matrices, which is responsible for transforming data received from the base model to adapt to a specific downstream task. For example, the weight matrices in the multiple paths are part of parameters that are fine-tuned during the adaptation phase. These matrices capture task-specific knowledge while preserving the knowledge encoded in the pre-trained base model. In an example, the weight matrices include multi-dimensional tensor arrays, as well as 2-dimensional matrices.

In an example, the weight matrices are trainable matrices that are injected into each path formed by the corresponding AI architecture, such as comprising layers of nodes and connections. The use of trainable weight matrices reduces a number of trainable parameters for downstream tasks greatly.

To this end, weights, weight matrices, and parameters pertain to the learnable components of the adapter. While the base model has its set of parameters, the multiple paths of the adapter may introduce additional parameters in the form of weight matrices that are fine-tuned to adapt the base model for specific downstream tasks. These parameters collectively define how the base model processes information and makes predictions in a task-specific manner.

In an example, the adapter of the present disclosure allows for training of a subset of the pre-trained parameters, or a set of new parameters pertinent to a particular domain or task. The details of the adapter are further described in conjunction with appended figures.

### Overview of AI system

FIG. 1 illustrates a block diagram 100 of an AI system 102 in which an adapter 106 is implemented, according to some example embodiments. The AI system 102 refers to a machine or a computation system that is configured to simulate human intelligence processes to perform tasks, such as natural language processing, speech recognition, process automation, robotics, machine vision, etc. In an example, the AI system 102 is configured to perform natural language processing, for example, by using large language models (LLMs). The AI system 102 includes the base model 104 that is pre-trained on a large corpus of training data, and the adapter 106 that is configured to fine-tune the base model 104 for domain-specific tasks.

In an example, the base model 104 is built using a transformer architecture. To this end, the transformer uses an attention mechanism (including self-attention/cross-attention) that allows the base model 104 to weigh different parts of an input sequence differently when making predictions. The attention mechanism is particularly effective for capturing long-range dependencies and understanding contextual relationships in language. The transformer architecture may also include multi-head attention that enables the base model 104 to attend to different positions in the input sequence simultaneously, allowing it to capture diverse patterns and relationships in the data. Further, the transformer may employ positional encoding added to input embeddings to provide information about the positions of words in a sentence. The transformer architecture includes feedforward neural networks as part of its layers. These networks are responsible for processing the information captured by the attention mechanism. In addition, Layer normalization functions and residual connections are used in the transformer architecture to stabilize training and facilitate the flow of information through the layers.

In an example, the base model in the AI system is built with deep convolutional network, deep multi-perceptron network, deep residual network, or U-net architecture. In an example, the base model is trained to generate realistic data through a diffusion process such as denoising diffusion probabilistic model (DDPM), denoising diffusion implicit model (DDIM), latent diffusion, and such variants. Another generative model includes variational autoencoder, generative adversarial network, and such variants The base model uses the vision transformer (ViT) for image data processing such as image segmentation, image classification, video anomaly detection, and so on.

Continuing further, for a downstream or domain-specific task the pre-trained base model 104 is adapted using the adapter 106. For exemplar natural language processing applications, the pre-trained base model 104 captures a wide range of language patterns, contextual relationships, and general linguistic knowledge from large corpora during the pre-training phase. This knowledge can then be fine-tuned for specific downstream tasks or domains by the adapter 106.

Further, the adapter 106 to the base model 104 of the AI system 102 is configured to fine-tune the base model 104 by updating weights for a small set of parameters. In an example, the adapter 106 comprises a connector 108, a non-linear modifier 110 and an AI trainer 112. The connector 108 of the adapter 106 is configured to connect the adapter 106 to the base model 104. Moreover, the non-linear modifier 110 forms the neural network architecture of the adapter 106. The non-linear modifier 110 includes layers and functions for transforming data and predicting outputs. Further, the AI trainer 112 is configured to train the non-linear modifier 110, and in certain cases, re-train the non-linear modifier 110.

During the training of the adapter 106, specifically, the non-linear modifier 110, the AI trainer 112 is configured to tune the non-linear modifier 110 by propagating training data through the base model 104 and the adapter 106. In particular, the training data relates to a particular domain or a specific downstream task for which the base model 104 is to be fine-tuned. Moreover, the training data may include, for example, a small corpus of labeled examples relevant to the target domain or target task. The training data is fed to the base model 104 for transformation while keeping the weights of the base model 104 frozen.

As the base model 104 is pre-trained, therefore, the base model 104 may transform the training data based on its existing knowledge. For example, as the weights (referred to as base model weights, hereinafter) of the base model 104 are frozen, the base model weights are not updated based on the training data. Instead, the base model 104 only transforms the training data based on existing knowledge. Further, the training data is also fed to the adapter 106. In certain cases, transformed data from the base model 104 is also fed to the adapter 106, particularly, the non-linear modifier 110 of the adapter 106 to improve training performance.

The non-linear modifier 110 may process the training data and/or transformed training data across the different layers of the multiple paths of the non-linear modifier 110 to extract relationships and dependencies in the training data. In this regard, the AI trainer 112 is configured to update weights (referred to as modifier weights, hereinafter) of the non-linear modifier 110 of the adapter 106. For example, only the modifier weights are updated through backpropagation and optimization algorithms. In an example, backpropagation may be used to calculate gradients or weights with respect to a set of adapter parameters fed to the paths of the non-linear modifier 110.

Once the adapter 106 is trained on the training data, input data is fed to the AI system 102. The input data includes a domain-specific task that corresponds to the domain of the training data. In this regard, the input data is fed to the base model 104. The input data includes a set of image data. Further, the connector 108 enables to transfer or propagate at least some portion of data transformed by the base model 104 from the base model 104 to the adapter 106. The connector 108 also enables to propagate data from the adapter 106 to the base model 104.

During the operation, the base model 104, having been trained on a large corpus of data during pre-training, extracts high-level features and representations from the input data. In an example, the base model 104 performs feature extraction by processing the input data through its layers, for example, based on a Transformer architecture, to generate output. At some point, for example, at some layers of the base model 104, transformed data, output or partially transformed data from the base model 104 is propagated from the base model 104 to the non-linear modifier 110 of the adapter 106 by the connector 108. In an example, the data received from the base model 104 includes contextualized representation of the input data.

Further, the non-linear modifier 110 processes the received portion of data to modify the received data non-linearly. Pursuant to present disclosure, the non-linear modifier 110 includes at least one non-linear path formed by an AI architecture that is configured to transform the portion of the data non-linearly, such as using a non-linear transformation function. The non-linear modifier 110 may include multiple paths comprising of non-linear paths, or a combination of linear paths and non-linear paths. To this end, the non-linear path(s) may include same or different non-linear functions arranged in a same or different manner. These non-linear functions of the non-linear paths may modify the received data non-linearly and adapt weights matrices of parameters for the specific downstream task. Further, fusion mechanisms may be employed to combine outputs from the multiple paths of the non-linear modifier 110 to ensure that the base model 104 benefits from the knowledge encoded in each of the multiple paths. The combined output is fed to the base model 104 as modified data. For example, the generation of an output from the base model 104 involves passing the adapted weight matrices and modified data through task-specific heads or output layers that generate final predictions or the output. The task-specific heads may include additional linear transformations, activation functions, or other operations depending on a nature of the task.

It may be noted, fine-tuning process of the base model 104 using the adapter 106 enhances the performance of the base model 104 by aligning it more closely with the linguistic patterns and nuances of a specific domain. To this end, the present disclosure provides a flexible and efficient mechanism for adapting base models, such as large language models to various domains, facilitating their deployment in diverse applications. In particular, the present disclosure provides a neural network architecture of the adapter 106 based on low-dimensional adaptation of weights or weight matrices of the adapter 106. For example, a function of the weight matrices is realized by multi-layer neural networks of the multiple paths of the non-linear modifier 110. Further, each of the multiple paths of the non-linear modifier 110 includes a bottleneck configuration of multiple layers to maintain parameter efficiency and a residual connection between weight matrices passed through the multiple paths. To this end, the non-linear modifier 110 of the adapter 106 disclosed herein is a low-dimensional, non-linear mapping or adaptation of adapter 106, thereby ensuring higher accuracy without increasing a number of trainable parameters or weights.

### Overview of training of the adapter

FIG. 2 illustrates a block diagram 200 of the AI system 102 in which the adapter 106 is trained for fine-tuning, according to some example embodiments. The training of the adapter 106 is performed such that only the modifier weights of the non-linear modifier 110 are updated while the base model weights are frozen.

At first, training data 204 that is specific to a domain or a downstream task is fed to the base model 104. The dataset of the training data 204 includes examples and their corresponding target labels or values. For example, for a question answering task for a particular domain, say medical domain, the training data 204 may include multiple domain-specific questions. For example, these questions may include medical domain-specific terms, abbreviations, etc. Further, the training data 204 may include answers for the questions and/or relevant information for forming answer for the corresponding questions.

Moreover, the pre-trained base model 104, such as a LLM trained on a general language understanding task is fed with the training data 204 and used for the training of the adapter 106. The base model weights are frozen to preserve the learned knowledge of the base model 104 from the pre-training. During the training process, the base model 104 serves as a feature extractor. In an example, the base model 104 is configured to process input sequences and produce high-level representations that encode rich contextual information from the training data 204. These representations are crucial for capturing task-agnostic patterns present in the data. By freezing the base model weights during the training of the adapter 106, the pre-trained knowledge is preserved. This is essential to ensure that the model retains its ability to understand language broadly, even as it adapts to task-specific patterns.

Further, parameters for the adapter 106 or the modifier weights of the non-linear modifier 110 are initialized. In an example, the modifier weights may be initialized randomly. In addition, modifier weights may be initialed for each of the multiple paths of the non-linear modifier 110. Thereafter, the representations that encode the contextual information from the training data 204 is passed through the multiple paths of the non-linear modifier 110. For example, the adapter 106 is connected to a first layer of the base model 104 to receive the representations of the training data 204. Subsequently, layers of the base model 104 lying before the first layer may generate the representations of the training data 204. These representations are provided to the adapter 106 as input. Further an output layer of the adapter 106 is connected to a second layer of the base model 104. In this manner, an output of the adapter 106 is merged with an output of the second layer of the base model 104. It may be noted that the first layer and the second layer are randomly chosen layers of the base model 104 and the use of the terms 'first' and 'second' is only to differentiate two layers and not to indicate any hierarchy of layers. Further, each of the multiple paths of the adapter 106 may process the training data, for example, representations of the training data based on corresponding labels, to update corresponding weights.

Further, the AI trainer 112 may be configured to generate or modify a loss function 202 based on the processing of the representations of the training data 204 by the multiple paths of the non-linear modifier 110. In an example, the loss function 202 is generated based on an output of the base model 104. Particularly, the output of the base model 104 is generated based on output of the adapter 106 fed to the second layer of the base model 104. Subsequently, the output of the base model 104 is also indicative of the output from the multiple paths of the adapter 106. Further, the overall loss function 202 is a combination of losses from the base model 104.

Based on a feedback of the resultant loss function 202 to the adapter 106, weights assigned to each parameter in the adapter 106 are adjusted based on an importance assigned to the predictions of the base model 104 and predictions of the adapter 106. In an example, backpropagation may be used to compute the gradients of the loss function 202 with respect to the weights of the multiple paths. Since the base model weights are frozen, they do not contribute to the gradient computation during this step.

In an example, the modifier weights are updated for the adapter 106 based on the computed gradients, for example, using an optimization algorithm. Examples of the optimization algorithm may include, but are not limited to, stochastic gradient descent, and Adam. The optimization process aims to minimize the loss function 202, effectively fine-tuning the adapter 106 for the task-specific data. For example, the training process is repeated for multiple epochs, allowing the adapter 106 to gradually adjust the modifier weights to the task-specific patterns in the training data 204.

After the training process, the performance of the adapter 106 may be evaluated based on test data. For example, the test data may include a domain-specific or downstream task, which is performed by the base model 104 and the adapter 106. Based on a final output of the base model 104, taking into consideration an output from the adapter 106, the adapter 106 may be retrained in the training phase or used for downstream tasks in inference phase. For example, the base model weights may remain frozen during the training phase as well as the testing phase.

### Exemplary architecture of non-linear modifier

FIG. 3A and FIG. 3B illustrate block diagrams 300 and 308, respectively, of an example non-linear modifier 110 of the adapter 106, according to different example embodiments. As described above, the non-linear modifier 110 may include multiple paths. Moreover, the multiple paths include at least one non-linear path and, in certain cases, one or more linear paths.

As may be understood, a path from the multiple paths refers to a lightweight module configured to enable task-specific fine-tuning in a pre-trained base model 104. For example, the path is formed by multiple AI architectures of data transformation. Examples of the AI architectures include, but are not limited to, layers (such as input layer, hidden layer(s), and output layer), nodes or neurons, connections, fully connected feed forward network, weight matrix, activation function, loss function, optimization algorithm and parameters. Further, each of the paths is either a linear path or a non-linear path. Further, a transformation function of each of the multiple paths may be selected as linear or non-linear in order to implement a linear path or a non-linear path, respectively.

In particular, the non-linear modifier 110 further includes a path splitter 302 configured to direct the received data from the base model 104 to each of the paths. In an example, the path splitter 302 is configured to generate identical copies of the received data and route the generated identical copies along the multiple computational paths within a neural network architecture of the non-linear modifier 110. To this end, the path splitter 302 facilitates parallel processing of the received data along the multiple paths, allowing the adapter 106 to adapt to different aspects of the data simultaneously.

The non-linear modifier 110 further includes a path combiner 304 configured to combine outputs of each of the paths to submit a combined output back to the base model 104. In an example, the path combiner 304 is configured to merge or combine information or processed output from different computational paths within a neural network architecture of the non-linear modifier 110. In particular, the path combiner 304 may aggregate outputs processed or generated by various paths. The path combiner 304 may decide how to combine the outputs of different paths before reaching a final output. In an example, the path combiner is configured to combine the outputs of the multiple paths of the non-linear modifier 110 using an operation. Examples of the operation may include, but is not limited to, an identity operation, a duplication operation, a permutation operation, a polynomial basis expansion operation, a Fourier basis expansion operation, an addition operation, a multiplication operation, a division operation, a subtraction operation, a modulo-addition operation, a modulo-product operation, a Kronecker product operation, a Kronecker sum operation, a Hadamard product operation, a concatenation operation, a log-sum-exp operation, an affine transform operation, a convolution operation, a randomization operation, a normalization operation, a nonlinear activation operation, and combination and/or variants thereof.

In an example, the use of path splitter 302, multiple paths and path combiners 304 introduces a level of modularity and adaptability to the adapter 106, making them suitable for handling diverse natural language processing tasks and scenarios.

Referring to FIG. 3A, the block diagram 300 of the non-linear modifier 110 includes the path splitter 302, the path combiner 304 and multiple paths. The multiple paths are depicted as, for example, a non-linear path 304A, a non-linear path 304B, and a non-linear path 304N (collectively referred to as non-linear paths 306). It may be noted that a total number of non-linear paths 306 in the non-linear modifier 110 may be selected randomly or based on downstream tasks to be performed by the AI system 102. Further, the non-linear paths 306 are configured to modify the received data non-linearly.

As may be noted, the non-linear modifier 110 includes multiple non-linear paths, depicted as non-linear paths 306. These different non-linear paths 306, i.e., an AI architecture of the different non-linear paths 306 may include or may be implemented using different non-linear functions, different arrangements of the same non-linear functions with respect to the weight matrices, or both. In an example, each of the different non-linear paths 306 may have different non-linear functions to modify the received data non-linearly in different manners. In such a case, the data received by a non-linear path may be modified linearly based on weights or weight matrices of the non-linear path and non-linearly based on the non-linear function of the non-linear path. Herein, the weights in the weight matrices of the non-linear path may be same, different or partially same with respect to weights of other non-linear paths in the non-linear modifier 110. For example, a non-linear path is configured to modify a first set of weights or a first weight matrix using a first non-linear function and a second set of weights or a second weight matrix using a second non-linear function. On the other hand, another non-linear path is configured to modify the second weight matrix using the first non-linear function and a third set of weights or third weight matrix using the second non-linear function.

Typically, a shallow non-linear path with structure of [A, ReLU, B] has been conventionally used for adapting adapters. However, the present disclosure uses deep non-linear paths 306 that form multiple layers between weight matrices A and B in order to capture underlying non-linear mapping. The number of learnable parameters of the non-linear modifier 110 are similar to linear paths, while computational complexity of the non-linear modifier 110 is slightly increased. This ensures that the non-linear paths or the non-linear modifier 110 overcomes the limitations of conventional shallow non-linear functions.

Alternatively, if the different non-linear paths 306 include same non-linear function(s), then an arrangement of the non-linear function(s) may be different across the different non-linear paths 306. In this regard, the different arrangement of the non-linear function(s) across the different non-linear paths 306 may be with respect to the weight matrices. In certain cases, different weight matrices may be modified differently across the different paths even when the different paths have same function. For example, a first set of weights from a weight matrix may be modified using a first non-linear function in a first path, two times (2x) of a second set of weights from the weight matrix may be modified using the first non-linear function in a second path, and 5 five times (5x) of the entire weight matrix may be modified using the first non-linear function in a third path.

It may be noted that the above described implementation of the multiple non-linear paths 306 is only exemplary and should not be construed as a limitation. The multiple paths (non-linear and linear) of the non-linear modifier 110 may be implemented in various configurations based on various combinations of allocation of weights in weight matrices for the multiple paths, type of non-linear functions for the multiple paths, and arrangement of the non-linear functions in the multiple paths. Some examples of these different configurations of the non-linear modifier 110 are discussed in more detail in the various embodiments of the present disclosure.

Returning to the present example, the path splitter 302 is configured to implement a suitable or predefined logic to generate identical or closely similar copies of the received data transformed by the base model 104. In this manner, the path splitter 302 is configured to feed the entire received data to each of the non-linear paths 306.

In an example, the AI architecture of each of the non-linear paths 306, say the non-linear path 306A is configured to modify the received data linearly using one or multiple weight matrices and modify the received data non-linearly using one or multiple non-linear functions. To this end, during inference, the non-linear path 306A may modify the received data or a subset of the received data linearly using weights in one or more weight matrices associated or allocated to the non-linear path 306A, while also modifying the corresponding received data non-linearly using associated non-linear function(s).

In an example, the non-linear path 306A may include one or more non-linear functions. For example, the one or more non-linear functions are non-linear transformation functions associated with, for example, different layers of the non-linear path 306A. For example, a non-linear function is a mathematical function that transforms a weighted input received by a layer or a neuron of the non-linear path 306A. The non-linear function is configured to produce a non-linear relationship between the data received by the layer or the non-linear path 306A and a predicted output of the non-linear path 306A. The non-linear function helps the neuron or the layer in extracting complex patterns present in the data received by the non-linear path 306A. In an example, the non-linear functions of the non-linear path 306A may only be used in hidden layers and output layer of the non-linear path 306A. Examples of the non-linear function may include, but are not limited to, ReLU function, Softmax function, Sigmoid function, and tanh function.

Pursuant to embodiments of the present disclosure, each of the non-linear paths 306 may have associated learnable parameters, such as weights and bias values. These weights and bias values assigned to each of the non-linear paths 306 may be represented within the one or more weight matrices. In an example, one or multiple weight matrices may be generated for each path for the training of the adapter 106.

In one example, the multiple non-linear paths 306 may include same weight matrices. Further, the multiple non-linear paths 306 may be configured to modify the same weight matrices differently, using different non-linear functions, different arrangements of non-linear functions, or a combination thereof. In this manner, the multiple non-linear paths 306 may share weights. Pursuant to the present example, the multiple non-linear paths 306 may share at least some weights. In this regard, at least some weights may remain same in weight matrices for each of the multiple non-linear paths 306, while certain weights may be different in weight matrices of the multiple non-linear paths 306.

As may be noted, weight sharing refers to the use of a same set of weights or parameters for multiple components, or the multiple non-linear paths 306 within a neural network architecture of the adapter 106. Instead of having distinct and independent sets of weights and/or bias for each path, weight sharing involves reusing same parameters across the different non-linear paths 306 of the non-linear modifier 110 model. Weight sharing may promote parameter efficiency, reduce model complexity, and enable shared learning across related tasks or the non-linear paths 306. Weight sharing also includes shuffling the index of the same weight matrix assigned at different paths. In an example, the weight sharing also includes projection mapping based on pre-defined function such as Walsh-Hadamard transform, random matrix, nonlinear transform, basis expansion, and so on. For example, fastfood projection uses a combination of shuffling, Walsh-Hadamard transform, Gaussian diagonal multiplication, and binary diagonal multiplication to map the same weight matrix into different weight matrix in a computationally efficient way without additional trainable parameters.

Turning to FIG. 3B, the block diagram 308 of the non-linear modifier 110 includes the path splitter 302, the path combiner 304 and multiple paths. The multiple paths are depicted as, for example, a non-linear path 306A, and a plurality of linear paths, such as a linear path 310A and a linear path 310N (collectively referred to as linear paths 310). Pursuant to present disclosure, the non-linear modifier 110 includes at least one non-linear path for non-linear operations. It may be noted that a total number of non-linear paths 306 or linear paths 310 in the non-linear modifier 110 may be selected randomly or based on downstream tasks to be performed by the AI system 102. Further, the non-linear path 306A is configured to modify the received data non-linearly while the linear path is configured to modify the received data linearly.

As may be noted, the non-linear modifier 110 includes multiple linear paths, depicted as linear paths 310. These different linear paths 310, i.e., an AI architecture of the different linear path 310 may include or may be implemented using different linear functions, different arrangements of a same set of linear functions with respect to the weight matrices, or both. In an example, each of the different linear paths 310 may have different linear functions to modify the received data linearly in different manners. In such a case, the data received by a linear path may be modified linearly based on weights of the linear path. Herein, the weights of the linear path may be same, different or partially same with respect to weights of other linear paths 310 in the non-linear modifier 110.

Continuing further, the path splitter 302 is configured to implement a suitable or predefined logic to duplicate or replicate the received data transformed by the base model 104. The path splitter 302 may feed the duplicated data to the different paths, i.e., the linear paths 310 and the non-linear path 306A.

In an example, the AI architecture of each of the paths, i.e., the non-linear path 306A and the linear paths 310 is configured to modify the received data linearly using corresponding one or multiple weight matrices. As described above, the non-linear path 306A may also modify the received data non-linearly using one or multiple non-linear functions. To this end, during inference, the paths 306A and/or 310 may modify the received data or a subset of the received data linearly using one or more weight matrices associated or allocated to the paths 306A and/or 310.

In an example, the linear paths 310 may include one or more linear functions. For example, the linear functions are configured to directly pass weighted input or the received input as output without any additional transformation. The one or more linear functions ensure that relationships between the received data and the predicted output from corresponding layer or neuron are linear. For example, the linear paths may be used at an output layer of the non-linear modifier 110. In certain cases, the non-linear modifier 110 may include multiple linear paths as part of hidden layers as well as output layer. The one or more linear functions may be implemented using any linear equation including, but not limited to, *f*(*x*) *= ax + b*, and *f*(*x*) *= ax.*

To this end, each of the non-linear path 306A and the linear paths 310 may have associated weight matrices comprising a subset of weights and biases from a pool of parameters relevant to the adapter 106. Further, in some cases, the non-linear path 306A and the linear paths 310 may have different weight matrices. While in some other cases, the non-linear path 306A and the linear paths 310 may share at least some weights and/or biases while having certain other non-shared or different weights and biases in corresponding weight matrices. In addition, the linear function(s) across each of the linear paths 310 may also vary, i.e., different linear paths 310 may use different linear functions or different arrangement of same linear functions.

Although the present example shows only one non-linear path 306A, the non-linear modifier 110 may include multiple non-linear paths 306 along with multiple linear paths 310 in other examples. To this end, non-linear function(s) across each of the multiple non-linear paths 306 may also vary, i.e., different multiple non-linear paths 306 may use different non-linear functions or different arrangement of same set of non-linear functions. Further, different non-linear functions in the different layers of the non-linear paths 306 may modify different set of weights or subset of weight matrices and data in different manner. For example, one nonlinear path uses Sigmoid activation, and another nonlinear path uses tanh activation. For another example, one path uses a weight matrix and another path reuses the same weight matrix but with different permutation and an additional nonlinear-transform such as power, exponentiation, ReLU, and so on.

### Detailed architecture of AI system

Referring to FIG. 4, there is shown a high-level block diagram 400 of the AI system 102 in which the adapter 106 is trained for fine-tuning, according to some example embodiments. FIG. 4 is described in conjunction with elements of the FIG. 1, FIG. 2, FIG. 3A and FIG. 3B.

According to present examples, the AI system 102 may include a computer-readable memory configured to store a pool of parameters 404 and a neural network including the base model 104 and the adapter 106. The base model 104 includes multiple layers, depicted as layers 410, 412, 414, and 416. In an example, the base model 104 has a transformer architecture. Further, the transformer architecture may be based on self-attention or cross-attention mechanism. In an example, the architecture of the base model 104 first converts an input or input data into an n-dimensional embedding, which is then fed to an encoder. The layers 410, 412, 414 and 416 may implement encoder and decoder stacked on each other several times. The layers 410, 412, 414 and 416 include mainly feed-forward and multi-head attention layers.

Further, the AI system 102 includes the adapter 106 to finetune the pre-trained base model 104. As described, the adapter 106 includes the connector 108, the non-linear modifier 110, and the AI trainer 112. Further, the non-linear modifier 110 includes at least one path, and in most cases, multiple paths. In particular, the path(s) of the non-linear modifier 110 includes at least one, and in some cases, multiple non-linear paths (depicted as non-linear paths 306). In certain cases, the non-linear modifier 110 may also include one or more linear paths 310. Details of the adapter 106 are described in conjunction with FIG. 1. Details of the non-linear paths 306 are described in conjunction with FIG. 3A, and details of linear paths 310 are described in conjunction with FIG. 3B.

The non-linear modifier 110 includes the path splitter 302. The path splitter 302 is configured to branch out copies of the portion of data from the base model 104. The portion of data may be transformed by the base model 104. The path splitter 302 may feed the transformed portion of data as input data to be processed by the one or multiple non-linear paths of the non-linear modifier 110 of the adapter 106. Further, the non-linear modifier 110 includes the path combiner 304. The path combiner 304 is configured to combine outputs of each of the non-linear paths 306 and to merge into another intermediate data in the base model 104. As described in FIG. 3A and FIG. 3B, the path combiner 304 may merge the outputs from the different paths based on an operation, such as concatenation, addition, multiplication, identity, duplication, permutation, polynomial bias expansion, Fourier bias expansion, division, subtraction, Kronecker product, Kronecker sum, Hadamard Product, convolution, log sum expansion, non-linear activation, a combination thereof, or variants thereof. Further, the operation of the path combiner 304 includes a parameter learned during the tuning of the AI trainer 112.

The AI system 102 or the AI trainer 112 further includes a weight constructor 402. The weight constructor 402 includes a pool of parameters 404 and a set of hyperparameters 406. In particular, the weight constructor 402 is configured to allocate the parameters 404 into the multiple paths of the non-linear modifier 110 of the adapter 106. In particular, the division of the parameters 404 is performed based on the set of hyperparameters forming rules of propagation of the parameters from the pool of parameters 404 into the weight matrices of the multiple paths (depicted as non-linear paths 306) of the non-linear modifier 110.

In an example, the weight constructor 402 is configured to update the pool of parameters 404 and the set of hyperparameters 406 for given weights of the base model 104. In other words, the weight constructor 402 may modify pool of parameters 404 and the set of hyperparameters 406 in order to align parameters or weights of the base model 104 with that of adapter 106 for efficient fine tuning. In an example, the weight matrix of the base model is approximated by quantizing lower-precision digits from the parameter pool. In another example, the weight matrix of the base model is approximated by pruning coefficients from the parameter pool. Yet another example uses low-rank approximation of the weight matrix for the base model. Doing so, the required memory, power consumption, and latency when executing the base model is reduced. In particular, by updating the pool of parameters 404 to be trained and the hyperparameters 406 of the adapter 106 based on parameters and hyperparameters of the base model 104, the pre-trained knowledge captured by the base model 104 during a large-scale pre-training phase is captured. Once an initial pool of parameters 404 and hyperparameters 406 are updated based on the parameters and hyperparameters of the base model 104, the updated pool of parameters 404 are divided into multiple matrices for the multiple non-linear paths 306 based on the updated set of hyperparameters 406.

In one example, the weight constructor 402 is configured to implement a suitable or predefined logic based on the set of hyperparameters 406 to divide or split weight and bias variables into one or more weight matrices for each of the non-linear paths 306, from the pool of parameters 404. In an example, a weight matrix may include a combination of parameters corresponding to weight variables and bias variables. The parameters from the pool of parameters 404 assigned within a weight matrix for a path may represent a set of weight and bias variables allocated to the path in the form of a matrix. Weight matrix makes it easy to compute and update the weight values and/or bias values during training. For example, the pool of parameters 404 associated with the adapter 106 are divided into multiple weight matrices such that the multiple matrices may include some shared weight or bias variables and some different weight or bias variables. For example, the weight constructor uses a predefined mapping function from the pool of parameters to generate multiple weight matrices for the adapter at once. In an example, the mapping function is configured with a hypernetwork, fastfood projection, and shuffling. Accordingly, the required number of parameters is further reduced to save the memory usage.

To this end, the learnable parameters within one or more weight matrices are associated with an AI architecture of a path, say the non-linear path 306A. For example, during a training phase, the non-linear path 306A may update weight and bias values for the weight and bias variables (or parameters) of the corresponding one or more weight matrices based on a mapping between training input and predicted output or ground truth output. Subsequently, during an inference phase, the non-linear path 306A may generate an output based on the one or more weight matrices associated with the path 306A and input data fed to the path 306A (such as, the portion of data received from the base model 104).

Pursuant to present example, the weight constructor 402 may decide how to distribute or divide the weight and bias variables (parameters) of the adapter 106 or the AI system 102 from the pool of parameters among the multiple non-linear paths 306 based on the set of hyperparameters. In one example, the set of hyperparameters 406 may be configured to define rules for diving the pool of parameters into weight matrices based on a size and a configuration of layers of each of the multiple non-linear paths 306. In another example, the set of hyperparameters 406 may be configured to define rules (such as, random initialization, or specific initialization strategy) associated with initialization of weight or bias values for the parameters (i.e., weight variables and bias variables) in the weight matrices. In yet another example, the set of hyperparameters 406 may be configured to define rules associated with, for example, learning rate, dropout rate, batch size, number of epochs, optimizer, weight decay, weights sharing across tasks, domains, or both, the parameter for path combiner 304, and task-specific hyperparameters, for the multiple non-linear paths 306.

Further, the weight constructor 402 is configured to propagate the parameters allocated to different non-linear paths 306 from the pool of parameters 404 to different weight matrices of the different non-linear paths 306 according to the trained hyperparameters 406. For example, the weight constructor 402, based on the hyperparameters, may selectively assign different subsets of parameters from the pool of parameters 404 to specific non-linear paths 306, enabling each of the non-linear paths 306 to focus on different aspects of the received data or handle specific tasks. Subsequently, 408 represents flow of different weight matrices to different non-linear paths 306 of the non-linear modifier 110. In another example, the hyperparameters are the factors of a low-rank matrix or tensor, and the weight constructor 402 constructs the matrix or tensor based on the hyperparameters, and then selectively assign different portion of the constructed matrix/tensor to specific non-linear paths 306.

In certain cases, weight matrices associated with the different non-linear paths 306 of the non-linear modifier 110 may also be fed to the base model 104. In an example, weight of the base model 104 may be approximated using the weight constructor 402. For example, a weight matrix of a layer of the base model 104 may be approximated via low-rank matrices. The weight constructor 402 uses such low-rank matrices to construct weight of the base model 104. Alternatively, the weight matrices in the base model 104 may be arranged to be a multi-dimensional (2D, 3D, 4D, ...) tensor, and low-rank tensor may be used to approximate an original tensor. For example, multi-dimensional tensor array is approximated by Tucker tensor decomposition or CANDECOMP/PARAFAC (CP) decomposition. In an example, the parameters of the non-linear paths 306 of the adapter 106 are arranged be a giant matrix or tensor, which may be generated by the hypernetwork.

During the training phase, the non-linear paths 306 are configured to update corresponding weight matrices based on training data, loss function 202 and ground truth data.

Once trained, the input is fed to the base model 104. The layers 410, 412, 414 and 416 (along with other not shown layers) of the base model 104 may transform the input based on existing knowledge and pre-determined weights of the base model 104. At some point, a portion of data or intermediate transformed data is propagated from the base model 104 to the adapter 106 using the connector 108. In an example, the connector 108 may feed the intermediate transformed data to the path splitter 302 that duplicates the received data into multiple copies and further feeds them to the non-linear paths 306 of the non-linear modifier 110. The AI architecture of the non-linear paths 306 includes layers of neurons, connections, non-linear functions and trained weight matrices. This AI architecture of the non-linear paths 306 is configured to transform the corresponding input (such as a subset of the intermediate transformed data). In one example, the input data to a path (linear or non-linear path) is transformed linearly based on one or more weight matrices by passing the input through multiple layers for linear multiplication between the data and the weights of the weight matrices. Further, for non-linear paths 306, the input data to a path is transformed non-linearly based on non-linear multiplication between the input data and one or more non-linear functions of the path. Further, outputs form the multiple non-linear paths 306 are combined by the path combiner 304, for example, using an operation. The combined output is then propagated back from the adapter 106 to the base model 104.

### Exemplary architecture of multiple paths of non-linear modifier

FIG. 5 illustrates a block diagram 500 of an example of multiple paths of the non-linear modifier 110 for forward propagation, according to some example embodiments. The multiple paths include a non-linear path 502, another non-linear path 504, and a linear path 506. For example, an AI architecture of the non-linear path 502 includes layers 1, 2, ... L, and a non-linear function 1. Similarly, an AI architecture of the non-linear path 504 includes layers 1, 2, ... M, a non-linear function 2, and a non-linear function 3. Further, an AI architecture of the linear path 506 includes layers 1, 2, ... N, and a linear function 1. The AI architecture of the paths 502, 504 and 506 may also include other components, such as nodes, connections, weight matrices, and other functions, such as activation, normalization, etc.

In an example, the weight constructor 402 is based on or implemented using a hypernetwork module 508 to generate weight variables and bias variables for the AI architecture of the multiple paths 502, 504, and 506 of the non-linear modifier 110 from the parameters 404. It may be noted, the hypernetwork module 508 is a neural network that generates weights for another neural network, i.e., the multiple paths 502, 504, and 506 of the modifier 110. The hypernetwork module 508 introduces an additional layer of flexibility by using another network to generate parameters and weights, allowing for more adaptive and context-specific learning.

For example, the set of hyperparameters 406 are configured to form rules of propagation of parameters into the different paths 502, 504, and 506 from the pool of parameters 404. In an example, based on the formed rules of propagation, parameters (or weight and bias variables) generated from the pool of parameters 404 may be put into weight matrices for the multiple paths 502, 504, and 506 of the non-linear modifier 110. It may be noted, the hypernetwork module 508 may generate weights and bias variables in a static or dynamic manner. In an example, the hypernetwork module 508 may be a static hypernetwork having a fixed or learned embedding and weight generator that outputs weights deterministically for the multiple paths 502, 504 and 506 of the adapter 106. In another example, the hypernetwork module 508 may be a dynamic hypernetworks that is configured to receive the input of the base model 104 or the adapter 106 and use it to generate dynamic weights for the multiple paths 502, 504 and 506. For example, based on the input, the dynamic hypernetwork implicitly recognizes the task of the input query (e.g., summarization, translation, etc.) and generates the weights for the multiple paths 502, 504 and 506 based on the task.

For example, the weight constructor 402 may be implemented within the hypernetwork module 508 or coupled to the hypernetwork module 508. Using the hypernetwork module 508, the pool of parameters 404 may be updated or used to generate weights, bias, weight variables and/or bias variables. Further, using the trained hyperparameters 406 and the generated weights, the weight constructor 402 may generate weight matrices for the different paths 502, 504 and 506 of the non-linear modifier 110.

In an example, the multiple paths, i.e., the non-linear paths 502 and 504 and the linear path 506, may be light-weight neural network modules. Subsequently, each of the paths 502, 504 and 506 may have a corresponding AI architecture. For example, the AI architecture may include a series of ordered layers (depicted as layers 1, 2, ..., L in path 502, layers 1, 2, ..., M in path 504 and layers 1, 2, ..., N in path 506). The layers of the different paths 502, 504 and 506 are configured to modify input data propagated to the corresponding paths 502, 504 and 506. For example, a layer, say layer 1, of a path, say the path 502, is configured to modify the input data for the path 502 by performing a linear multiplication between the input data and weights of a weight matrix associated with the path 502. For example, if a path is linear, such as the path 506, the input data is transformed based on the above-described linear multiplication between the input data and the weights of a weight matrix associated with the path 502. However, if a path is non-linear, such as the path 502 or 504, the input data is further transformed non-linearly based on non-linear functions, i.e., the non-linear functions 1, 2 or 3.

It may be noted, the parameters or weights included in the weight matrices of the paths 502, 504 and 506 is a small fraction of weights compared to weights of the base model 104. For example, the weights in the weight matrices of the multiple paths 502, 504 and 506 (such as multiple linear and/or non-linear paths of the non-linear modifier 110) come from the common pool of parameters 404. To this end, to tune the non-linear modifier 110, the AI trainer 112 is configured to update the common pool of parameters 404. In particular, the AI trainer 112 is configured to update the common pool of parameters 404 based on the parameters of the base model 104 as well as downstream tasks or specific domain for which the adapter 106 is used or trained. For example, the pool of parameters 404 is updated to ensure that the parameters or weights on which the adapter 106 or the non-linear modifier 110 is trained are relevant to the downstream tasks or domain.

Further, it may be noted that the weight matrices of the paths 502, 504 and 506 in the non-linear modifier 110 of the adapter 106 have lower dimensions than weight matrices of the base model 104. Subsequently, only a small fraction of weights associated with the adapter 106 are trained for fine-tuning the base model 104.

In particular, the AI trainer 112 is configured to update weights of the adapter 106 for frozen weights of the base model 104. In particular, during the training, the weight constructor 402 is configured to generate and propagate weight matrices for the different paths 502, 504, and 506. The layers of the different paths 502, 504, and 506 may include executors configured to process data with the neural network to produce transformed data. To this end, the different paths 502, 504, and 506 may receive training data. Further, the AI trainer 112 uses the training data 204 to train a small set of the pool of parameters 404 of the adapter 106 without the parameters of the base model 104, such as by keeping the parameters or weights of the base model 104 frozen.

In one example, the weight matrices of the multiple paths 502, 504, and 506 of the adapter 106 are coming from the pool of parameters 404 updated by the AI trainer 112 during the tuning. Moreover, a number of parameters in the pool of parameters 404 is more than 1000 times less than a number of parameters of the base model 104. In other words, all the parameters or weights trained or updated during the tuning of the non-linear modifier 110 of the adapter 106 comes form the pool of parameters 404 which is a small fraction of parameters. Further, the number of parameters trained during the tuning of the base model 104 is very small, i.e., more than thousand times less, compared to the number of parameters of the base model 104.

### Exemplary flowchart of operations of the AI system

FIG. 6 illustrates an example flowchart 600 of a method for adapting the base model 104 of the AI system 102 using the adapter 106, according to some embodiments of the present disclosure. In an example, the base model 104 may be a pre-trained model, such as a PLM. The base model 104 may have corresponding set of pre-trained weights. Further, the adapter 106 is implemented using the connector 108, the non-linear modifier 110 and the AI trainer 112.

At 602, the adapter 106 is connected to the base model 104 such that during an operation of the AI system 102 at least some portion of data transformed by the base model 104 is propagated from the base model 104 to the adapter 106 and back from the adapter 106 to the base model 104.

In particular, the base model 104 is pre-trained and may start to transform input data upon receiving. As may be understood, the base model 104 may include various layers and a large number, such as in an order of billions, of weights or parameters. The pre-trained model may be implemented for generic tasks but may fail to provide output with high accuracy for domain-specific tasks that are different from pre-trained tasks. Therefore, the base model 104 needs to be fine-tuned for downstream domain-specific tasks.

By connecting the adapter 106 to the base model 104, a path for data propagation is established between the base model 104 and the adapter 106. During operation, intermediately transformed data from the base model 104 is propagated to the adapter 106, specifically, one or more paths of the non-linear modifier 110. In an example, the adapter 106 includes a path splitter 302 for duplicating and feeding the received intermediate data from the base model 104 among the one or more paths of the non-linear modifier 110. In an example, the path splitter 302 is configured to branch out the intermediate data received from the base model 104 and direct the branched intermediate data as input to be processed by the one or more paths of the non-linear modifier 110. In this manner, the one or more paths of the non-linear modifier 110 may receive the same received data transformed by the base model 104.

At 604, the non-linear modifier 110 of the adapter 106 is tuned using the AI trainer 112 of the adapter 106. In an example, the AI trainer 112 may cause to propagate training data 204 through the base model 104 and the adapter 106 and update weights of the non-linear modifier 110 of the adapter 106 for given or frozen weights of the base model 104 to optimize a loss function 202.

In an example, the training process of the non-linear modifier 110 may include using the weight constructor 402 to construct weight matrices for each of the multiple paths of the non-linear modifier 110. For example, the non-linear modifier 110 may include multiple paths, such that the multiple paths include at least one non-linear path. The different paths may have different weight matrices, same weight matrices, or some shared weights in the different weight matrices. Further, the weight constructor 402 may use a common pool of parameters 404 for constructing the weight matrices for each of the multiple paths. The weight matrices may include weight variables and bias variables to allocate parameters into the AI architecture of the corresponding path. For example, rules for constructing the weight matrices for the different paths may be determined from the set of hyperparameters 406. In certain cases, the weight constructor 402 may be implemented using the hypernetwork module 508. For example, the weight constructor 402 may construct the weight matrices for the paths by updating the parameters 404 and hyperparameters 406 based on pre-trained weights of the base model 104 and downstream tasks. Moreover, the weight constructor 402 may propagate the constructed weight matrices to corresponding each of the paths.

In certain cases, the weight constructor 402 may construct weights for the paths by approximating the weights or parameters of the base model 104. In such a case, a combined operation of quantization, sparsification, low-rank decomposition, tensor decomposition, Monarch projection, Cauchy/Hankel/Vandermonde/Toeplitz-like transform, hypernetwork, knowledge distillation, quantum distillation, and variants thereof may be used for constructing the weights for the paths. Some non-limiting examples of operations for approximating weights are described in conjunction with FIG. 9, FIG. 10, FIG. 11 and FIG. 14.

Further, during the training, the weights of the non-linear modifier 110, i.e., the weights of the weight matrices of the paths of the modifier 110 are updated for the adapter 106 without training or updating the weights of the base model 104.

At 606, intermediate data received from the base model 104 is modified non-linearly using the tuned non-linear modifier 110 before returning the modified portion of the data back to the base model 104. For example, the non-linear modifier 110 may include multiple paths, such that the multiple paths include at least one non-linear path. Each of the multiple paths may have corresponding AI architecture comprising of, for example, layers, weight matrices, transformation function, and other operations. The non-linear path(s) of the non-linear modifier 110 are configured to modify the received portion of the intermediate data linearly based on the corresponding weight matrices and the data, as well as non-linearly based on corresponding non-linear functions and the data. In certain cases, the non-linear modifier 110 may include multiple non-linear paths 306 and multiple linear paths 310.

To this end, each of the multiple paths may generate an output based on transforming corresponding input using functions and weight matrices. The multiple outputs are combined by the path combiner 304 using one or more operations, such as addition, multiplication, Hadamard product, division, concatenation, polynomial bias expansion, Kronekcker Product, etc. The path combiner 304 is further configured to combine the outputs of the multiple paths having at least one non-linear path into another intermediate data in the base model 104.

Once the adapter 106 or the non-linear modifier 110 is trained, the adapter 106 may perform operations in inference phase to generate predicted outputs based on the weight matrices updated during the training and non-linear functions in the corresponding paths. For example, the output generated by the paths are combined with intermediate data of the base model 104 to produce a final output for a downstream task.

According to embodiments of the present disclosure, the AI architecture of the paths may include weight matrices, such that weights or parameters in the weights matrices of the paths is substantially less than the weights of the base model 104. In other words, a dimension of the weights in the weight matrices is less than a dimension of the weights of the base model 104. Moreover, during pre-training of base model 104, the pre-trained weights of the base model 104 are generated based on training of the base model 104 is performed on source training data 204 collected in a source domain. Further, for training the adapter 106 to generate weight matrices for the paths, the training of the non-linear modifier 110 or the paths is performed on target training data collected in a target domain.

### Exemplary architectures of the non-linear modifier according to present disclosure

Typically, LoRA assumes that a change in weights during adapter adaptation or tuning has a low 'intrinsic rank', leading to the LoRA approach. For a dense layer of a pre-trained base model, its original pre-trained weights, e.g., ***W* ∈ *R*^{*d*×*d*}** is frozen. During fine-tuning, LoRA uses low-rank decomposition matrices, depicted as a first weight matrix, ***A*** ∈ ***R*^{*d*×}*^{r},*** and a second weight matrix, BE ***R*^{*r*×}*^{d},*** to constrain the weight update Δ***W** = **AB.*** As the rank ***r*** is typically set to be very small, the number of parameters in ***A*** and ***B*** are significantly less than that of the original ***W.***

Further, assuming an input to the dense layer of the pre-trained base model to be *x,* an output of the dense layer is ***h*₀** *= **xW.*** After LoRA fine-tuning of the dense layer, a new output is represented as ${h}_{LoRA}^{′} = {h}_{0} + Δ {h}_{LoRA}$ , where Δ***h_{LoRA}** = **xAB.*** Thus, the mapping from input ***x*** to the updated output ${h}_{LoRA}^{′} = xAB$ is a low-rank (i.e., r-dimensional) linear mapping.

Though an update of the mapping ***x*** → Δ***h*** may have an intrinsic low dimension for task adaptation, it may not be well captured by the linear low-rank adaptation ***xAB*** in LoRA.

Some embodiments of the present disclosure are based on a realization that a more general low-dimensional adaptation ***f***(***x***) may capture mapping for task adaptation accurately. Therefore, the present disclosure provides a LoDA approach and its variants, which has been described in the FIGS. 1-6 and will be discussed in detail in the following figures.

According to present disclosure, the base model 104 may have a transformer architecture. Subsequently, conventional terminologies for transformer architecture are used, where ***d_{model}*** denotes input/output dimension of a Transformer block. Moreover, ***W_{q}, Wₖ, Wᵥ*** are used to refer to query, key, and value projection matrices, respectively, in self-attention module of the base model 104.

FIG. 7A and FIG. 7B illustrate a block diagram 700 and 720, respectively, of a LoDA architecture of the non-linear modifier 110, according to different embodiments of the present disclosure.

It is an objective of the present disclosure to design and realize low-dimensional adaptation, ***f_{LoDA}*** (***x***)*,* to generalize LoRA, while keeping LoRA as a special case.

Accordingly, the present disclosure discloses a deep neural network architecture for LoDA. A function, ***f_{LoDA}*** (·)*,* for fine-tuning the base model 104 using the adapter 106 is realized by multi-layer neural networks, i.e., the multiple paths of the non-linear modifier 110. In particular, each of the multiple paths, such as the non-linear paths 306, 502 and 504, and the linear paths 310 and 506, have an AI architecture. The AI architecture may include a bottleneck configuration of multiple layers. The bottleneck configuration in the paths of the non-linear modifier 110 may enable to maintain parameter efficiency and a residual connection 716 between a first weight matrix, ***A*,** 706 and a second weight matrix, ***B*,** 708 for the multiple paths. To this end, the non-linear modifier 110 is implemented using the LoDA architecture may be viewed as a non-linear version with non-linear mapping indicated by: ***x*** → Δ***h_{LoDA}*** = ***f_{LoDA}***(***x***)*.*

It may be noted that the use of the first weight matrix, ***A***, 706 and the second weight matrix, ***B*,** 708 for training the adapter 106 and use of one path in the non-linear modifier 110 is only exemplary. In other embodiments, more weight matrices may be generated for, for example, the multiple paths.

The non-linear modifier 110 is implemented using the multiple paths including at least one non-linear path. Further, the multiple paths may include linear or non-linear functions for transforming input data 704. For example, the input data 704, x, may have an order or dimension as ***d*.** In an example, a first non-linear path is arranged with a series of ordered layers and a second non-linear path is formed with the series of ordered layers in a different arrangement and with different set of non-linear functions may be used for training the adapter 106 for finetuning the base model 104.

In an example, a non-linear path may include a series of linear layers (depicted as linear layers 714A and 714B in FIG. 7A and linear layers 718A and 718B in FIG. 7B) and non-linear functions (depicted as non-linear functions 712A and 712B). Examples of the non-linear functions 712A and 712B may include, but are not limited to, Leaky ReLU, activation, and layer-normalization.

For example, the first weight matrix, ***A*,** 706 and the second weight matrix, ***B*,** 708 are propagated to the non-linear path, such that the parameters of the first weight matrix 706 is updated simultaneous to the parameters of the second weight matrix 708. In this manner, parameters of all matrices in the linear and non-linear paths of the non-linear modifier 110 are updated simultaneously. In an example, the weight matrix is parameterized by a combination of high-order Kronecker product, Hadamard product, CP/Tucker tensor decomposition, random projection, and basis expansion, to reduce the required number of independent parameters.

In particular, the weight matrices, ***A*** and ***B,*** 706 and 708 have low dimension as compared to parameters of the base model 104. Further, the bottleneck configuration of the layers of the non-linear path provides the residual connection 716. The residual connection architecture of LoDA may be represented mathematically as: $Δ {h}_{LoDA} = {f}_{LoDA} \left(x\right) = xAB + f 1 \left(xA\right) B ,$ where ***f*1**(·) is a non-linear function between the first weight matrix 706 and the second weight matrix 708. In an example, an output, Δ***h_{LoDA}**,* of the non-linear path is generated by transforming input data based on the first weight matrix 706 and the second weight matrix 708. Further, based on merging the output, Δ***h_{LoDA}***, of the non-linear path with an output, ***h*₀**, generated based on pre-trained weights, ***W,*** 702 of the base model 104, an output, ***h'_{LoDA}**,* 710 of the AI system 102 is generated.

In an example, during the inference phase, the first weight matrix 706 and the second weight matrix 708 having the residual connection 716 may be used to transform the intermediate input data to produce transformed output, Δ***h _{LoDA}***,.

In particular, the residual connection 716, also known as a skip connection or shortcut connection, is a type of architectural element commonly used in deep neural networks. A primary purpose of the residual connection 716 is to facilitate the training of very deep networks by mitigating the vanishing gradient problem and enabling the flow of information across multiple layers of the multiple paths more effectively.

In a typical neural network layer, an output is computed as a transformation of the input data through a set of learned parameters (weights and biases) and an activation function. Mathematically, this can be represented as: $Output = Activation \left(Weight⋅Input+Bias\right) .$

In the context of a residual connection 716, the output is modified to include a direct shortcut or identity mapping from the input to the output. Subsequently, the updated representation of the output can be represented as: $Output = Activation \left(Weight⋅Input+Shortcut+Bias\right) .$

Here, the Shortcut term represents an identity mapping of the input. Instead of forcing the neural network to learn the identity mapping, which could lead to the vanishing gradient problem in very deep networks, the shortcut connection allows the network to learn residuals or changes to the input.

It may be noted that the illustration of the LoDA architecture of the non-linear modifier 110 is only exemplary and should not be considered as a limitation. In an example, the non-linear part ***f*1**(·) between the first weight matrix 706 and the second weight matrix 708 may have more layers.

Referring to FIG. 7B, the linear layers 718A and 718B are depicted to have non-square bottleneck layers. In an example, the non-square weight matrices may be used to implement the non-square bottleneck layers of the non-linear path.

To this end, LoRA may be considered as a special case of LoDA if ***f*1(*xA*)*B*** in Equation (1) is zero. This may be achieved when, for example, a hidden layer's weights in a path of the modifier 110 are zero or ***f*₁**(·) is linear.

In particular, the LoDA architecture of the multiple paths of the non-linear modifier 110 generalizes LoRA from a low-rank linear mapping/adaptation to low-dimensional non-linear mapping/adaptation, and keeps LoRA as a special case.

Further, some embodiments of the present disclosure are based on a realization that the non-linear mapping in the non-linear paths of the non-linear modifier 110 still lies in a low-dimensional linear subspace (i.e., a range of the second weight matrix B).

Accordingly, an objective of the present disclosure is to further generalize the LoDA architecture of the adapter 106, specifically, the non-linear modifier 110, to a low-dimensional (non-linear) manifold, while keeping LoRA as a special case, and using almost a same number of tunable parameters as LoRA.

In order to implement the low-dimensional (non-linear) manifold, the non-linear modifier 110 is implemented based on a LoDA+ architecture.

FIG. 8 illustrates a block diagram 800 of a LoDA+ architecture of the non-linear modifier 110, according to different embodiments of the present disclosure.

According to the LoDA+ architecture of the non-linear modifier 110, a first non-linear path may include a first non-linear function ***f*₁**(·) and a second non-linear function ***f*₂**(·). For example, the first non-linear function and the second non-linear function may be non-linear activation function and/or non-linear layer normalization function. With the additional second non-linear function ***f*₂**(·) in the second path, a mapping at an output of the non-linear modifier 110 becomes a combination of a linear subspace and a non-linear manifold. An output 802 of the LoDA+ architecture of the non-linear modifier 110 is represented as: $Δ {h}_{LoDA +} = {f}_{LoDA +} \left(x\right) = xAB + {f}_{2} \left({f}_{1}\left(xA\right)B\right) .$

Herein, the first term, i.e., ***xAB***, in the Equation (2) corresponds to the linear subspace and the second term, i.e., ***f*₂**(***f*₁**(***xA***)***B*** corresponds to the non-linear manifold.

In an example, the adapter 106 or the non-linear modifier 110 is configured to operate parallelly with respect to the base model 104. The LoDA and LoDA+ architecture of the non-linear modifier 110 may use shallow adapter 106 in a parallel manner instead of a sequential manner.

According to an example embodiment, the shallow adapter 106 may only include a down-projection layer, followed by a non-linear activation function (typically ReLU), then an up-projection layer. Further, the adapter 106 is attached to an input and an output of an attention module or a feed-forward network module of a Transformer in an LLM. In an example, the LoDA and LoDA+ architecture of the non-linear modifier 110 aims to learn a low-dimensional, non-linear mapping, having a deep structure to capture the underlying nonlinearity.

Further, the non-linear modifier 110 are attached to ***W_{q}*** and ***Wᵥ*** of the transformer architecture of the base model 104. To this end, the adapter 106 is not attached to the whole attention module or feed-forward network module of Transformer block.

Further, the LoDA+ architecture of the non-linear modifier 110 includes a residual connections 804 inside, i.e., between an output of the first weight matrix 706 and an input of the second weight matrix 708. In addition, LoDA+ architecture of the non-linear modifier 110 can be viewed as a deep and shallow dual parallel adapter, where the shallow and deep parts correspond to the first and second terms in the Eq. 2, respectively.

It may be noted, LoDA and LoDA+ non-linear modifier 110 based adapters are applied to projection matrices ***W_{q}*** and ***Wᵥ.*** As a result, the entire matrices ***W_{q}*** and ***Wᵥ*** are not fine-tuned directly. It may be noted that directly fine tuning a weight matrix *W* of a dense layer of the base model 104 still retains a linear mapping between weights or parameters and data. Mathematically, for an input, ***x,*** to a dense layer, an output is ***h*₀** *= **xW.*** After directly fine-tuning the dense layer, ***W' = W** +* Δ***W**,* and a new output of the dense layer can be represented as ***h'_{FT^{W}}** = **xW'** = **xW** + **x***Δ***W** =* ***h*₀** *+* Δ***h_{FT^{W}}***, where Δ***h_{FT^{W}}** = **x***Δ***W**.* To this end, a mapping between the input ***x*** and the output Δ***h_{FT^{W}}*** is still linear, even when the mapping is low rank.

However, for LoDA and LoDA+ architecture of non-linear modifier 110 with non-linear paths, outputs can be represented as Δ***h_{LoDA}*** and Δ***h*_{*LoDA*+}**, respectively. As provided in the Equation (1) and the Equation (2), the mappings are non-linear, and cannot be expressed in the form of Δ***h** = **x***Δ***W**.* Further, LoDA and LoDA+ architecture can be viewed as expanding learning capacity of LoRA.

Some embodiments of the present disclosure are based on a realization that a dimension of the non-linear paths in the non-linear modifier 110 in LoDA and/or LoDA+ architecture is restricted to a very small r. Due to this, additional computation cost that may arise during an inference is very small.

Further, as the adapter 106 based on LoDA or LoDA+ runs in parallel with the pre-trained weight matrix *W* of the base model 104, the adapter 106 will not introduce any apparent delay in an overall inference with parallelization.

Some embodiments of the present disclosure are based on a realization that in LoDA and LoDA+ architecture of the non-linear modifier 110, the main bottleneck of the computation, dependency of parameters is still on *W* of the base model 104.

To this end, an objective of the present disclosure is to further improve computation efficiency of a LoDA or LoDA+ fine-tuned model. In particular, an objective of the present disclosure is to improve the computation efficiency of the adapter 106 even better than the pre-trained base model 104.

FIG. 9 illustrates a block diagram 900 of a S-LoDA (+) architecture of the non-linear modifier 110, according to some embodiments of the present disclosure. The S-LoDA (+) may include sparsified adaption of LoDA (as described in FIG. 7A and FIG. 7B), and sparsified adaption of LoDA+ (as described in FIG. 8).

The S-LoDA (+) architecture includes the first weight matrix 706, a second weight matrix 708 and a residual connection between an output of the first weight matrix 706 and an input of the second weight matrix 708. Further, a non-linear path having layers and operations may implement a non-linear function ***f*₁**(·) between the first weight matrix 706 and the second weight matrix 708.

To this end, the S-LoDA (+) architecture involves approximating values of certain parameters or weights of the base model 104 form the pre-trained and frozen weights of the base model 104. In particular, to improve computational efficiency of the adapter 106, the S-LoDA (+) architecture is configured to assign and propagate weights or weigh matrices of the paths of the adapter 106 based on a set of approximated base model weights, *W*, of the base model 104.

In particular, the AI trainer 112 is configured to train the adapter 106 and use the approximation module 902 to generate the set of approximated weights 904 from a weights matrix 908 of the base model 104. In an example, the set of approximated weights 904 may include approximate new values of weights or parameters that are not set to zero in the weight matrix 908. The approximated new values may be generated to achieve a common objective, i.e., training or fine-tuning of the base model 104 based on the adapter 106. In an example, more than half of values in the weight matrix 908 may be set to zero. For example, the parameters having lower magnitude values are set to zero. Further, based on non-zero values and corresponding parameters of the weigh matrix 908, the set of approximated weights 904 are generated.

In an example, the approximation module 902 is configured to approximate or set values of certain parameters from the multitude of parameters or weights of the base model 104 in the matrix 908 to zero. To this end, values of parameters of the base model 104 that are not set to zero are retained and used during the training for training the adapter 106. For example, the weight matrix 908 may include a large number of parameters, such as in an order of billions, associated with the base model 104. To this end, values of more than half of the parameters in the weight matrix 908 are set to zero and remaining values are approximated to be used for the training of the adapter 106. For example, the values of the parameters (for example, corresponding to dark blocks) in the matrix 908 are set to zero. Further, the approximation module 902 is configured to generate the set of approximated weights 904.

In accordance with an example, an original weight matrix, *W*, and S-LoDA may keep 60% non-zero entries of *W.* For example, the magnitude (or absolute value) of the elements of *W* may be analyzed and 40% of smallest (in terms of absolute value) elements of *W* may be set to zero.

Further, the set of approximated weights 904 is used by the weight constructor 402 to generate and propagate weight matrices for the multiple paths of the non-linear modifier 110 of the adapter 106. To this end, the adapter 106 is trained jointly with approximation of the parameters in the weight matrix 908 to zero. The adapter 106 is trained and finetuned based on the set of approximated weights 904 corresponding to a subset of parameters that are not set to zero in the matrix 908. In particular, weights of the base model 104 are not trained, rather approximated (e.g., sparsified) and then updated or modified. The adapter 106 is trained based on approximation of the parameters in the weight matrix 908. Once trained, the values of the parameters may be updated and used for inference. An output 906 of the S-LoDA (+) is generated based on the non-linear function and the updated weights of the adapter 106 in an inference phase. The output 906 may include a prediction for a downstream task by the non-linear path of the S-LoDA (+) architecture.

FIG. 10 illustrates a block diagram 1000 of a R-LoDA (+) architecture of the non-linear modifier 110, according to some embodiments of the present disclosure. The R-LoDA (+) may include low-rank adaption of LoDA (as described in FIG. 7A and FIG. 7B), and low-rank adaption of LoDA+ (as described in FIG. 8).

To this end, the R-LoDA (+) architecture involves low-rank approximation of the weights *W* of the base model 104. For example, the low-rank approximation of the weights of the base model 104 includes extracting a small set of parameters and corresponding values from the weights of the base model 104. The rank, R, of the small set of weights is significantly lower (no fixed threshold) than a number of rows and columns in the matrix of weights, *W*, of the base model 104. The low rank matrix 1004 is used by the AI trainer 112 to jointly train the adapter 106 by feeding weight matrices to the multiple paths of the adapter 106 and simultaneously approximate a subset of the weight matrix *W* of the base model 104 to achieve a common objective to train the adapter 106. The weight matrix *W* of the base model 104 is not trained, it is approximated (e.g., sparsified) and then updated while weights of the adapter 106 are trained. The low-rank approximations of W are used to train the adapter 106 while the weight matrix *W* is frozen during the fine-tuning or training. Further, an output 1002 of the R-LoDA (+) is generated in an inference phase. The output 1002 may include a prediction for a downstream task by the non-linear path of the R-LoDA (+) architecture.

To this end, a rank *R* is chosen for the small set of weights in the weight matrix *W*, and factorization, for example, singular value decomposition (SVD), is performed on the set of the weights W. Further, the values of the set of weights in the weight matrix *W* are approximated by its rank-R version. Further, the approximations of the weights in the weight matrix *W* are fixed or updated. The adapter 106 is trained based on the fixed or updated approximations of the set of weights.

According to the present disclosure, the R-LoDA (+) and S-LoDA (+) architecture of the non-linear modifier 110 may achieve high computational efficiency than the pre-trained base model 104 during inference.

It may be noted, combined projection matrices ***Wₚᵣₒⱼ*** = [***W_{q}***; ***Wₖ***; ***Wᵥ***] of size 1024-3072 bytes within an attention module of the transformer of the base model 104 may be well approximated by a relative low-rank matrix 1004 with rank < 500 or a relatively sparse matrix 908 with more than half of the entries equal to zero. For example, by using only a number of top singular values *R* ,say 300, of ***Wₚᵣₒⱼ*** preserves over 93% of a total energy of the adapter 106. Further, by keeping 40% of larger magnitude entries from the weight matrix 908 of ***Wₚᵣₒⱼ*** preserves over 96% of a total energy of the adapter 106.

For the LoDA and LoDA+ architecture, the first weight matrix 706, ***A*** ∈ ***R*^{*d*×*r*}**, and the second weight matrix 708, ***B*** ∈ ***R*^{*r*×*d*}.** Further, the two bottleneck matrices 706 and 708 in FIG. 7A, FIG. 7B, FIG. 8, FIG. 9, FIG. 10 and FIG. 11 are ***r* × *r*** square matrices, and there are some non-linear activation and/or layer-normalization layers. For example, a computation complexity of a LoDA (+) adapter during the inference can be represented as: ***O***(***rdn*** + ***dn*** + ***r*²*n*** + ***rn***), where a dominant part is ***O***(***rdn***), which is much lower than computing ***XW_{q}*** (or ***XWᵥ***), which costs ***O***(***d*²*n***), since ***r*** « ***d*** (for example, if r = 4 and d = 1024 in GPT2-medium).

For example, by applying R-LoDA as described in FIG. 10 and S-LoDA on ***W_{q}*** and ***Wᵥ*,** low-rank or sparsify approximate of weights may be approximated separately. To make the model inference more efficient, the whole ***Wₚᵣₒⱼ** =* [***W_{q}***; ***Wₖ***; ***Wᵥ***] may be directly approximated. More specifically, for ***Wₚᵣₒⱼ*** ∈ ***R*^{*d*×3*d*},** the entire ***Wₚᵣₒⱼ*** may be approximated using a product of matrix ***W_{A}*** ∈ ***R*^{*d*×*R*}** and a matrix ***W_{B}*** ∈ ***R*^{*R*×3}*^{d},*** i.e., the first and the second weight matrices 706 and 708. For example, the computation complexity for ***XWₚᵣₒⱼ*** is **3*d*²*n*** Multiply-Accumulate Operations (MACs) while the computation complexity for the low-rank version (***XW_{A}***)***W_{B}*** is ***ndR** +* ***nR*3*d*** = **4*Rdn*** MACs, which is lower than the former as long as ***R*** < **3*d*/4.** For example, in GPT2-medium, d = 1024, so R needs to be less than 768). In an example, the R-LoDA (+) fine-tuned model described in FIG. 10 is computationally more efficient than the pre-trained model 104 during inference, even when setting R as high as 700. Similarly, the S-LoDA (+) fine-tuned model described in FIG. 9 is computationally more efficient than the pre-trained model 104, since ***r*** « ***d*.**

Referring to FIG. 11, a block diagram 1100 of another low-rank approximation architecture (referred to as Q-LoDA) for the non-linear modifier 110 is illustrated. The Q-LoDA architecture of the non-linear modifier 110 may include the first and second weight matrices 706 and 708, the non-linear function ***f*₁**(·), and several layers and operations in the non-linear path. The Q-LoDA architecture further involves using the approximation module 902 to generate weights and bias variables, i.e., parameters for the adapter 106 based on approximating values from the matrix of the base model 104. In an example, the approximation module 902 may generate low-rank weights, having an order of R, from the weigh matrix of the base model 104. In this manner, the base model 104 is approximated based on quantization of the weights. For example, the weights or values of the parameters approximated by the approximation module 902 may be limited to integer values, such that float values are converted to int values for the approximated weights 1104. Based on the approximated weights 1104, the non-linear modifier 110 of the adapter 106 is trained to update the approximated weights. Further, once trained, the non-linear path of the non-linear modifier 110 of the adapter 106 generates an output 1102. The output 1102 may be a prediction for a downstream task.

According to an example embodiment, Q-LoDA employs techniques of 4-bit NormalFloat (NF4) quantization and Double Quantization. Moreover, paged optimizers may be used to prevent memory spikes during gradient checkpointing from causing out-of-memory errors that have traditionally made finetuning on a single machine difficult for large models. In an example, NormalFloat (NF) data type builds on quantile quantization which is an information-theoretically optimal data type that ensures each quantization bin has an equal number of values assigned from an input tensor. Quantile quantization works by estimating a quantile of the input tensor through an empirical cumulative distribution function. Further, the double quantization process of quantizing the quantization constants is used for additional memory savings.

It may be noted, the architecture of the non-linear modifier 110 based on LoDA (in FIG. 7A and FIG. 7B), LoDA+ (in FIG. 8), S-LoDA (+) (in FIG. 9), R-LoDA (+) (in FIG. 10), and Q-LoDA (+) (in FIG. 11) is only exemplary. Further, the architectures of the non-linear modifier 110 having single non-linear path and two weight matrices 706 and 708 is also exemplary. Exemplary architectures of AI system

Referring to FIG. 12, a block diagram 1200 of an example architecture of the AI system 102 is shown, according to some embodiments of the present disclosure. The AI system 102 includes the base model 104 having frozen pre-trained weights 702, ***W*₀ ∈ *R*^{*p*×}*^{q}.*** Further, the AI system 102 includes the adapter 106.

Pursuant to present example, the non-linear modifier 110 of the adapter 106 includes a first path 1202 and a second path 1204. The first path 1202 is configured to receive and update the matrices ***A*₁** *E* ***R*^{*r*×*q*}** and ***B*₁** ∈ **R^{*p*×*r*},** such as based on multiplication. In an example, based on receiving the input data 704 or a portion of the input data 704, the matrices ***A*₁** and ***B*₁** may be multiplied with the data 704 to transform the data linearly and non-linear function(s) of the first path 1202 may transform the data 704 non-linearly. Further, second path 1204 is configured to receive and update the matrices ***A*₂** ∈ ***R*^{*r*×*q*}** and ***B*₂** ∈ ***R*^{*p*×*r*},** such as based on multiplication. Similar to the first path 1202, based on propagated data 704, the matrices ***A*₂** and ***B*₂** may be multiplied with the data 704 to transform the data 704 linearly and non-linear function(s) of the second path 1204 may transform the data 704 non-linearly.

Further, an overall matrix of the non-linear modifier 110 is generated by combining or merging the matrices of the first path 1202 and the second patch 1204 using a Hadamard product 1208. The overall matrix may be defined as: ***A*₁*B*₁** ⊙ ***A*₂*B*₂**. To this end, the first path 1202 and the second path 1204 are non-linear, indicated by a non-linear operation or function 1210. Illustration of the non-linear function 1210 is only exemplary. The non-linear function 1210 is implemented within layers of the paths 1202 and 1204. Further, once an output is generated for the first path 1202 and the second path 1204 using the Hadamard product 1208, the output is merged with an output (or weights or intermediate data) of an intermediate layer of the pre-trained base model 104 using an addition operation 1212 to generate a final output 1206 for a task.

FIG. 13 illustrates a block diagram 1300 of an example architecture of the AI system 102, according to some embodiments of the present disclosure. The AI system 102 includes the base model 104 having frozen pre-trained weights 702, ***W*₀ ∈ *R*^{*p*×}*^{q}.*** Further, the AI system 102 includes the adapter 106.

Pursuant to present example, the non-linear modifier 110 of the adapter 106 includes a first path 1302 and a second path 1304. The first path 1302 is configured to receive and update a matrix ***C*** ∈ ***R*^{*uₚ*×}*^{u_{q}}.*** Further, based on receiving the input data 704 or a portion of the input data 704, the input data is transformed based on the matrix C and one or more non-linear functions associated with the first path 1302 to transform the received data non-linearly. Further, the second path 1304 is configured to receive and update the matrices ***A*** E ***R^{r×v_{q}}*** and ***B*** ∈ ***R*^{*vₚ*×}*^{r},*** such as based on multiplication. Based on the received data 704, the matrices **A** and **B** may be multiplied with the data 704 to transform the data 704 linearly and non-linear function(s) of the second path 1304 may transform the data 704 non-linearly.

Further, an overall matrix of the non-linear modifier 110 is generated by combining or merging the matrices of the first path 1302 and the second patch 1304 using a Kronecker product 1308. The overall matrix may be defined as: ***C kronecker AB.*** To this end, the first path 1302 and the second path 1304 are non-linear, indicated by a non-linear operation or function 1310. Illustration of the non-linear function 1310 is only exemplary. The non-linear function 1310 is implemented within layers of the paths 1302 and 1304. Further, once an output is generated for the first path 1302 and the second path 1304 using the Kronecker product 1308, the output is merged with an output (or weights or intermediate data) of an intermediate layer of the pre-trained base model 104 using an addition operation 1312 to generate a final output 1306 for a task.

It may be noted, the weight constructor 402 is configured to generate and feed or propagate the weight matrices A, B and C for the first path 1302 and the second path 1304 from a pool of parameters 404. In an example, at least some weights may be shared among the weight matrices A, B and C.

### Another exemplary architecture of non-linear modifier

Referring to FIG. 14, a block diagram 1400 of the non-linear modifier 110 implemented using HyperLoDA architecture is illustrated, according to some embodiments. The architecture of HyperLoDA for the non-linear modifier 110 included using the weight constructor 402 to generate weights from the pool of parameters 404. In particular, the weight constructor 402 may utilize the hypernetwork module 508 to generate weights for different layers of the non-linear paths. For example, the weight for a layer may be represented as: *W=f*(*P*, layer), where p corresponds to the parameters 404 and layer indicates configuration and position of the layer. For example, weight and bias variables are generated for different layers of the non-linear path and propagated through the non-linear path for update during training. The non-linear path includes a function ***f*₁** (·) and another function ***f*₂** (·). Once trained, the updated weights of the layers may be utilized to transform the input data 704 and generate an output 1402. In an example, the hypernetwork generates a smaller set of weight coefficients at a time, while the whole weight matrices are generated by an implicit representation trick feeding the row and column identification along with the matrix identification, specifically, the (*i*, *j*)-th weight coefficient is given as *Wᵢⱼ*=*f*(*P*, *i*, *j*, layer). The hypernetwork model*f*(.) is realized by another neural network. In an example, the hypernetwork can use further frozen parameters which are randomly generated or optimized over a different set of training data.

In accordance with an example embodiment, hypernetwork is a neural network that generates weights for another neural network. Pursuant to present disclosure, the hypernetwork generates weights for LoDA adapters, such as the adapter 106. In particular, LoDA adapters are applied to different layers of the base model 104. For example, there may be several LoDA adapters in total implemented in conjunction with the base model 104. Moreover, parameters of the LoDA adapters are different from each other. Further, an input to the hypernetwork may be a layer index of a corresponding LoDA adapter, and an output of the hypernetwork are the parameters for the corresponding LoDA adapter in that layer.

### Exemplary operations of path combiner

FIG. 15A, FIG. 15B, FIG. 15C, FIG. 15D, FIG. 15E and FIG. 15F illustrate different operations of path combiner 304, according to various embodiments of the present disclosure. It may be noted, the non-linear modifier 110 includes multiple paths, such as the non-linear paths 306 and the linear paths 310. To this end, the path splitter 302 may feed the intermediate transformed data received from the base model 104 to different non-linear paths of the non-linear modifier 110.

Further, each non-linear path of the non-linear modifier 110 may include corresponding AI architecture including, for example, layers, neurons, linear or non-linear functions, weight matrices, and other operations. Pursuant to present disclosure, the AI architecture may include a residual connection between an output of the first weight matrix (A) 706 and an input of the second weight matrix (B) 708. To this end, a final output of AI system 102 is generated based on combining outputs of different paths of the adapter 106 with an output (***h*₀**) of the base model 104. For example, the outputs of different paths of the adapter 106 are first combined by the path combiner 304 using an operation, and further combined with the output (***h*₀**) of the base model 104.

Referring to FIG. 15A, the path combiner 304 may be implemented using a Hadamard product 1506 and an addition operation 1504. To this end, a combined output of the adapter 106 combined using the Hadamard product 1506 may be represented as: $Δ {h}_{LoDA +} = {f}_{LoDA +} \left(x\right) = xAB ⊙ {f}_{2} \left({f}_{1}\left(xA\right)B\right) .$

Where ***xAB*** corresponds to linear transformation of the input data 704 based on the weight matrices A and B, and ***f*₂**(***f*₁**(***xA***)***B***) corresponds to non-linear transformation of the input data 704 based on the weight matrices A and B and the functions ***f*₁** and ***f*₂*.***

Further, a final output 1502, ***h',*** of the AI system 102 is obtained by adding the combined output, **Δ*h*_{*LoDA*+},** of the adapter 106 with output, ***h*₀,** of the base model 104.

In an example, the weight matrix, *A*, may be a sparse matrix generated by the approximation module, such that ***A*** ∈ ***R*^{*d*×3*r*}.** In such a case, an output based on combining an output of a non-linear path with an output of the base model 104 may be represented as: $Δ {h}_{LoDA} = {f}_{LoDA} \left(x\right) = xAB + {f}_{1} \left(xA\right) B .$

Referring to FIG. 15B, the path combiner 304 may be implemented using only Hadamard product 1506. To this end, a combined output of the adapter 106 combined using the Hadamard product 1506 may be represented as: $Δ {h}_{LoDA +} = {f}_{LoDA +} \left(x\right) = xAB ⊙ {f}_{2} \left({f}_{1}\left(xA\right)B\right) .$

Where ***xAB*** corresponds to linear transformation of the input data 704 based on the weight matrices A and B, and ***f*₂**( ***f*₁**(***xA***)***B***) corresponds to non-linear transformation of the input data 704 based on the weight matrices A and B and the functions ***f*₁** and ***f*₂*.***

Further, a final output 1508, ***h',*** of the AI system 102 is obtained by performing another Hadamard product 1506 between the combined output, **Δ*h_{LoDA+}*,** of the adapter 106 and output, ***h*₀,** of the base model 104.

To this end, various operations for the path combiner 304 may be used to combine the outputs of the multiple paths of the non-linear adapter 106 as well as output of the base model 104.

Referring to FIG. 15C, FIG. 15D, FIG. 15E and FIG. 15F, a number of paths are not defined. For example, a first path may include functions ***f*₁** and ***f*₂** while a second path may include functions ***f*₃** and ***f*₄** to transform the corresponding portion of input data 704. In certain cases, a path may not include any function, such as to implement a linear path.

FIG. 15C illustrates a path combiner implemented using the addition operation 1504. In an example, outputs of the multiple paths, such as linear and non-linear paths, are combined using addition operation 1504. For example, the combined output for the multiple paths may be represented as: $\begin{matrix}Δ {h}_{LoDA +} = {f}_{LoDA +} \left(x\right) = xAB + {f}_{2} \left({f}_{1}\left(xA\right)B\right) + {f}_{4} \left({f}_{3}\left(xA\right)B\right) + ⋯ + \\ {f}_{2 k} \left({f}_{2 k - 1}\left(xA\right)B\right) .\end{matrix}$

In an example, the path splitter 302 may be implemented using a polynomial basis expansion. In this regard, a function 1512 may be added to the portion of data fed to a non-linear path, such as the non-linear path having the functions ***f*₃** and ***f*₄*.*** In such a case, the combine output for the different paths may be represented as: $Δ {h}_{LoDA +} = {f}_{LoDA +} \left(x\right) = xAB + {f}_{2} \left({f}_{1}\left(xA\right)B\right) + {f}_{4} \left({f}_{3}\left({\left(xA\right)}^{2}\right)B\right) + ⋯ .$

In another example, the path combiner 304 may be implemented using polynomial basis expansion and affine transform. In such a case, a combined output for the multiple paths may be represented as: $\begin{matrix}Δ {h}_{LoDA +} = {f}_{LoDA +} \left(x\right) = xAB + {s}_{11} {f}_{2} \left({f}_{1}\left(xA\right)B\right) + {s}_{21} {f}_{4} \left({f}_{3}\left(xA\right)B\right) + ⋯ \\ \left(a\right) + {s}_{12} {\left[{f}_{2}\left({f}_{1}\left(xA\right)B\right)\right]}^{2} + {s}_{22} {\left[{f}_{4}\left({f}_{3}\left(xA\right)B\right)\right]}^{2} + ⋯ \\ \left(b\right) + {s}_{13} {\left[{f}_{2}\left({f}_{1}\left(xA\right)B\right)\right]}^{3} + {s}_{23} {\left[{f}_{4}\left({f}_{3}\left(xA\right)B\right)\right]}^{3} + ⋯ .\end{matrix}$

Based on another addition operation 1504 between the combined output ***Δh_{LoDA+}*** and the output of the base model 104, an output 1510 is generated.

FIG. 15D illustrates a path combiner implemented using the Hadamard product 1506. In an example, outputs of the multiple linear and non-linear paths are combined using the Hadamard product 1506. For example, the combined output for the multiple paths may be represented as: $\begin{matrix}Δ {h}_{LoDA +} = {f}_{LoDA +} \left(x\right) = \\ xAB ⊙ {f}_{2} \left({f}_{1}\left(xA\right)B\right) ⊙ {f}_{4} \left({f}_{3}\left(xA\right)B\right) ⊙ {f}_{6} \left({f}_{5}\left(xA\right)B\right) + ⋯ .\end{matrix}$

Based on another Hadamard product 1506 between the combined output Δ*h_{LoDA+}* and the output of the base model 104, an output 1514 is generated.

FIG. 15E illustrates a path combiner implemented using a Kronekcker product 1518. In an example, outputs of the multiple linear and non-linear paths are combined using the Kronekcker product 1518. Based on another Kronekcker product 1518 between the combined output and the output of the base model 104, an output 1516 is generated.

FIG. 15F illustrates a path combiner implemented using a concatenation operation 1522. In an example, outputs of the multiple linear and non-linear paths are combined using the concatenation operation 1522. Based on another concatenation operation 1522 between the combined output and the output of the base model 104, an output 1520 is generated.

FIGS. 15A-15F only illustrate example operations for the path combiner 304 and should not be construed as a limitation. In certain cases, different combinations of the operations may be used for combining outputs. In other cases, other variants of the operations may be used for combining outputs.

### Exemplary implementation of AI system for downstream tasks

FIG. 16 illustrates an example schematic illustration 1600 of different downstream tasks for the base model 104 fine-tuned using the adapter 106, according to some embodiments. As may be noted, the adapter 106 is implemented using one or more non-linear paths having non-linear functions and weight matrices. The design, configuration, arrangement, weight matrices, and functions in the one or more non-linear paths may be customizable, i.e., could have various possibilities. Certain non-limiting examples of the configuration of the non-linear paths and the architecture of the adapter 106 are described in conjunction with FIGS. 1- 15.

In order to perform a downstream task, the adapter 106 is trained on the domain-specific training data associated with the downstream task.

Pursuant to present example, the AI system 102 may be used by different users for performing different downstream tasks. For example, each user (depicted as user 1602, 1064, and 1606) may have a corresponding downstream tasks (depicted as tasks 1608, 1610 and 612). For example, each of the downstream tasks 1608A, 1608B and 1608C has a corresponding trained adapter (depicted as adapters 106A, 106B and 106C). During implementation, an exchange module is configured to keep the base model 104 and dynamically load each of the adapters 106A, 106B and 106C to the memory or intermediate layers of the base model 104 for the corresponding user task.

In an example, during the downstream tasks, the path splitter 302 is configured to choose which task-specific adapter from the adapters 106A, 106B and 106C to use, when each adapter corresponds to a specific task. In an example, the selection may be performed based on hard learned splitting or soft learned splitting.

FIG. 17 shows a block diagram of the AI system 102 for adapting the base model 104 using the adapter 106. The AI system 102 may be configured to use adapted base model 104 for downstream tasks in target domains, according to some embodiments.

To this end, the AI system 102 may include various modules executed by a processor 1702 to process the input data 704 and control the operation of the adapter 106 and/or the base model 104. The processor 1702 may process the input data 704 using the base model 104 and the adapter 106 to carry out a downstream task associated with the input data 704 in the target domain. For example, the downstream task is a natural language processing-related task.

The AI system 102 may have a number of input and output interfaces connecting the AI system 102 with other systems and devices. For example, a network interface controller (NIC) 1720 is adapted to connect the AI system 102 through a bus 1718 to a network 1730. Through the network 1730, either wirelessly or through the wires, the AI system 102 may receive the input data 704 as input signal. In some implementations, a human machine interface (HMI) 1716 connects the AI system 102 to a keyboard 1712 and a pointing device 1714, wherein the pointing device 1714 may include a mouse, a trackball, a touchpad, a joystick, a pointing stick, a stylus, or a touchscreen, among others. Through the HMI 1716 or the NIC 1720, the AI system 102 may receive data, such as the input data 704.

The AI system 102 further includes the output interface configured to output results or output of performing a downstream task during the operation of the base model 104 and the adapter 106. For example, the output interface may include a memory 1710 to store and/or output an output or task results. For example, the AI system 102 may be linked through the bus 1718 to a display interface 1724 adapted to connect the AI system 102 to a display device 1726, such as speakers, headphones, a computer monitor, a camera, a television, a projector, or a mobile device, among others. The AI system 102 may also be connected to an application interface 1722 adapted to connect the AI system 102 to equipment 1732 for performing various operations.

The AI system 102 includes the processor 1702 configured to execute stored instructions, as well as the memory 1710 that stores instructions that are executable by the processor 1702. The processor 1702 may be a single core processor, a multi-core processor, a computing cluster, or any number of other configurations. The memory 1710 may include random access memory (RAM), read only memory (ROM), flash memory, or any other suitable memory systems. The processor 1702 is connected through the bus 1718 to one or more input and output devices. These instructions implement a method for adapting the base model 104 to domain-specific tasks while keeping trainable parameters low and improving efficiency of fine-tuning.

## Claims

1. An artificial intelligence (AI) system (102) comprising an adapter (106) to a base model (104) of the AI system (102), the adapter comprising:
a connector (108) configured to connect the adapter to the base model such that during an operation of the AI system, the base model receives input data comprising a set of image data, and at least some portion of the input data transformed by the base model is propagated from the base model to the adapter and back from the adapter to the base model, wherein the base model is configured to use the vision transformer (ViT) for an ferimage data processing task;
a non-linear modifier (110) configured to modify the data received from the base model non-linearly before returning the modified portion of the data back to the base model; and
an AI trainer (112) configured to tune the non-linear modifier of the adapter by propagating training data (204) specific to the image data processing task through the base model and the adapter and updating weights of the non-linear modifier of the adapter for given weights of the base model to optimize a loss function (202),
wherein the non-linear modifier includes multiple paths (306, 310) formed by multiple AI architectures of data transformation, each of the paths is either a linear path (310) configured to modify the received data linearly or a non-linear path (306) configured to modify the received data non-linearly, wherein an AI architecture of the linear path modifies the received data linearly using one or multiple weight matrices, wherein an AI architecture of the non-linear path modifies the received data linearly using one or multiple weight matrices and modifies the received data non-linearly using one or multiple non-linear functions, and wherein the non-linear modifier includes at least one non-linear path.

2. The system of claim 1, wherein the non-linear modifier includes multiple non-linear paths using different non-linear functions, different arrangements of the same non-linear functions with respect to the weight matrices, or both.

3. The system of claim 2, wherein the non-linear modifier includes at least one linear path, or
wherein the multiple non-linear paths include the same weight matrices.

4. The system of claim 2, wherein the multiple non-linear paths share at least some weights, or
wherein weights in the weight matrices of the multiple non-linear paths come from a common pool of parameters, such that to tune the non-linear modifier, the AI trainer updates the common pool of parameters.

5. The system of any one of claims 1 to 4, wherein the non-linear modifier comprises:
a path splitter configured to direct the received data to each of the multiple paths; and
a path combiner configured to combine outputs of each of the multiple paths to submit a combined output back to the base model.

6. The system of claim 5, wherein the path combiner combines the outputs using an operation including one or a combination of: an identity, a duplication, a permutation, a polynomial basis expansion, a Fourier basis expansion, an addition, a multiplication, a division, a subtraction, a modulo-addition, a modulo-product, a Kronecker product, a Kronecker sum, a Hadamard product, a concatenation, a log-sum-exp, an affine transform, a convolution, randomization, a normalization, a nonlinear activation operation, and variants thereof,
optionally wherein the operation of the path combiner includes a parameter learned during the tuning of the AI trainer.

7. The system of any one of claims 1 to 6, wherein the AI architecture of the non-linear path includes a bottleneck configuration of multiple layers.

8. The system of any one of claims 1 to 7, wherein the AI trainer is further configured to approximate the base model and train the adapter and to achieve a common objective.

9. The system of any one of claims 1 to 8, wherein the AI trainer further comprises a weight constructor comprising a pool of parameters and a set of hyperparameters forming rules of propagation of the parameters from the pool of parameters into the weight matrices of the multiple paths of the non-linear modifier, and wherein the weight constructor is configured to:
update the pool of parameters and the set of hyperparameters for given weights of the base model; and
propagate the parameters from the pool of parameters to different weight matrices of different paths according to the trained hyperparameters.

10. The system of any one of claims 1 to 9, wherein the AI trainer updates weights of the adapter for frozen weights of the base model.

11. The system of any one of claims 1 to 10, wherein weight matrices of the adapter have lower dimensions than weight matrices of the base model.

12. The system of any one of claims 1 to 11, wherein weight matrices of the adapter are coming from a pool of parameters updated by the AI trainer during the tuning, and wherein a number of parameters in the pool of parameters is more than 1000 times less than a number of parameters of the base model.

13. A computer-implemented method for adapting a base model of an artificial intelligence (AI) system using an adapter, the method comprising:
connecting (602), using a connector of the adapter, the adapter to the base model such that during an operation of the AI system, the base model receives input data comprising a set of image data, and at least some portion of the input data transformed by the base model is propagated from the base model to the adapter and back from the adapter to the base model, wherein the base model is configured to use the vision transformer (ViT) for an image data processing task; ;
modifying (606), using a non-linear modifier of the adapter, the data received from the base model non-linearly before returning the modified portion of the data back to the base model; and
tuning (604), using an AI trainer of the adapter, the non-linear modifier of the adapter by propagating training data specific to the image data processing task through the base model and the adapter and updating weights of the non-linear modifier of the adapter for given weights of the base model to optimize a loss function,
wherein the non-linear modifier includes multiple paths formed by multiple AI architectures of data transformation, each of the paths is either a linear path configured to modify the received data linearly or a non-linear path configured to modify the received data non-linearly, wherein an AI architecture of the linear path modifies the received data linearly using one or multiple weight matrices, wherein an AI architecture of the non-linear path modifies the received data linearly using one or multiple weight matrices and modifies the received data non-linearly using one or multiple non-linear functions, and wherein the non-linear modifier includes at least one non-linear path.

14. The method of claim 13, wherein the AI trainer further comprises a weight constructor comprising a pool of parameters and a set of hyperparameters forming rules of propagation of the parameters from the pool of parameters into the weight matrices of the multiple paths of the non-linear modifier, and wherein the method further comprises:
updating, using the weight constructor, the pool of parameters and the set of hyperparameters for given weights of the base model; and
propagating, using the weight constructor, the parameters from the pool of parameters to different weight matrices of different paths according to the trained hyperparameters.

15. A non-transitory computer readable storage medium embodied thereon a program executable by a processor for performing the method according to claim 13 or 14.

## Patentansprüche

1. System der künstlichen Intelligenz (KI) (102), umfassend einen Adapter (106) für ein Basismodell (104) des KI-Systems (102), wobei der Adapter umfasst:
einen Verbinder (108), der konfiguriert ist, den Adapter mit dem Basismodell zu verbinden, so dass während eines Betriebs des KI-Systems das Basismodell Eingabedaten empfängt, die einen Satz von Bilddaten enthalten, und zumindest ein Teil der vom Basismodell transformierten Eingabedaten vom Basismodell zum Adapter und vom Adapter zurück zum Basismodell weitergegeben wird, wobei das Basismodell konfiguriert ist, den Vision-Transformer (ViT) für eine Bilddatenverarbeitungs-Task zu nutzen;
einen nichtlinearen Modifizierer (110), der konfiguriert ist, die von dem Basismodell empfangenen Daten nichtlinear zu modifizieren, bevor der modifizierten Teil der Daten an das Basismodell zurückgegeben wird; und
einen KI-Trainer (112), der konfiguriert ist, den nichtlinearen Modifizierer des Adapters durch Weitergabe von Trainingsdaten (204) spezifisch für die Bilddatenverarbeitungs-Task durch das Basismodell und den Adapter abzustimmen, und Gewichtungen des nichtlinearen Modifizierers des Adapters für gegebene Gewichtungen des Basismodells zu aktualisieren, um eine Verlustfunktion (202) zu optimieren,
wobei der nichtlineare Modifizierer mehrere Pfade (306, 310) enthält, die durch mehrere KI-Architekturen zur Datentransformation gebildet sind, wobei jeder der Pfade entweder ein linearer Pfad (310) ist, der konfiguriert ist, die empfangenen Daten linear zu modifizieren, oder ein nichtlinearer Pfad (306) ist, der konfiguriert ist, die empfangenen Daten nichtlinear zu modifizieren, wobei eine KI-Architektur des linearen Pfades die empfangenen Daten unter Verwendung einer oder mehrerer Gewichtungsmatrizen linear modifiziert, wobei eine KI-Architektur des nichtlinearen Pfades die empfangenen Daten unter Verwendung einer oder mehrerer Gewichtungsmatrizen linear modifiziert und die empfangenen Daten unter Verwendung einer oder mehrerer nichtlinearer Funktionen nichtlinear modifiziert, und wobei der nichtlineare Modifizierer zumindest einen nichtlinearen Pfad enthält.

2. System nach Anspruch 1, wobei der nichtlineare Modifizierer mehrere nichtlineare Pfade enthält, die unterschiedliche nichtlineare Funktionen, unterschiedliche Anordnungen derselben nichtlinearen Funktionen in Bezug auf die Gewichtungsmatrizen oder beides nutzen.

3. System nach Anspruch 2, wobei der nichtlineare Modifizierer zumindest einen linearen Pfad enthält, oder
wobei die mehreren nichtlinearen Pfade dieselben Gewichtungsmatrizen enthalten.

4. System nach Anspruch 2, wobei die mehreren nichtlinearen Pfade zumindest einige Gewichtungen teilen, oder
wobei Gewichtungen in den Gewichtungsmatrizen der mehreren nichtlinearen Pfade aus einem gemeinsamen Pool von Parametern stammen, so dass der KI-Trainer zur Abstimmung des nichtlinearen Modifizierers den gemeinsamen Pool von Parametern aktualisiert.

5. System nach einem der Ansprüche 1 bis 4, wobei der nichtlineare Modifizierer umfasst:
einen Pfad-Aufteiler, der konfiguriert ist, die empfangenen Daten zu jedem der mehreren Pfade zu leiten; und
einen Pfad-Kombinierer, der konfiguriert ist, Ausgaben jedes der mehreren Pfade zu kombinieren, um eine kombinierte Ausgabe zurück an das Basismodell zu übermitteln.

6. System nach Anspruch 5, wobei der Pfad-Kombinierer die Ausgaben unter Verwendung einer Operation kombiniert, die eines oder eine Kombination enthält von: einer Identität, einer Duplikation, einer Permutation, einer Polynom-Basiserweiterung, einer Fourier-Basiserweiterung, einer Addition, einer Multiplikation, einer Division, einer Subtraktion, einer Modulo-Addition, eines Modulo-Produkts, eines Kronecker-Produkts, einer Kronecker-Summe, eines Hadamard-Produkts, einer Konkatenation, einer Log-Sum-Exp, einer affinen Transformation, einer Konvolution, einer Randomisierung, einer Normalisierung, einer nichtlinearen Aktivierungsoperation und Varianten davon,
wobei der Betrieb des Pfad-Kombinierers optional einen Parameter enthält, der während des Abstimmens des KI-Trainers erlernt wurde.

7. System nach einem der Ansprüche 1 bis 6, wobei die KI-Architektur des nichtlinearen Pfades eine Bottleneck-Konfiguration aus mehreren Layern enthält.

8. System nach einem der Ansprüche 1 bis 7, wobei der KI-Trainer ferner konfiguriert ist, das Basismodell zu approximieren, den Adapter zu trainieren, und ein gemeinsames Ziel zu erreichen.

9. System nach einem der Ansprüche 1 bis 8, wobei der KI-Trainer ferner einen Gewichtungs-Konstruktor umfasst, der einen Pool von Parametern und einen Satz von Hyperparametern umfasst, welche Regeln für eine Weitergabe der Parameter aus dem Pool von Parametern in die Gewichtsmatrizen der mehreren Pfade des nichtlinearen Modifizierers bilden, und wobei der Gewichtungs-Konstruktor konfiguriert ist, um:
den Pool von Parametern und den Satz von Hyperparametern für gegebene Gewichtungen des Basismodells zu aktualisieren; und
die Parameter gemäß den trainierten Hyperparametern aus dem Pool von Parametern an verschiedene Gewichtungsmatrizen verschiedener Pfade weiterzugeben.

10. System nach einem der Ansprüche 1 bis 9, wobei der KI-Trainer Gewichtungen des Adapters für eingefrorene Gewichtungen des Basismodells aktualisiert.

11. System nach einem der Ansprüche 1 bis 10, wobei Gewichtungsmatrizen des Adapters geringere Dimensionen aufweisen als Gewichtsmatrizen des Basismodells.

12. System nach einem der Ansprüche 1 bis 11, wobei Gewichtungsmatrizen des Adapters aus einem Pool von Parametern stammen, der von dem KI-Trainer während der Abstimmung aktualisiert wird, und wobei eine Anzahl von Parametern in dem Pool von Parametern mehr als 1000-mal geringer ist als eine Anzahl von Parametern des Basismodells.

13. Computerimplementiertes Verfahren zur Anpassung eines Basismodells eines Systems der künstlichen Intelligenz (KI) unter Verwendung eines Adapters, wobei das Verfahren umfasst:
Verbinden (602), mittels eines Verbinder des Adapters, des Adapters mit dem Basismodell, so dass während eines Betriebs des KI-Systems das Basismodell Eingabedaten empfängt, die einen Satz von Bilddaten enthalten, und zumindest ein Teil der vom Basismodell transformierten Eingabedaten vom Basismodell zum Adapter und vom Adapter zurück zum Basismodell weitergegeben wird, wobei das Basismodell konfiguriert ist, den Vision-Transformer (ViT) für eine Bilddatenverarbeitungs-Task zu nutzen;
Nichtlineares Modifizieren (606), mittels eines nichtlinearen Modifizierers des Adapters, der von dem Basismodell empfangenen Daten, bevor der modifizierten Teil der Daten zurück an das Basismodell gegeben wird; und
Abstimmen (604), mittels eines KI-Trainers des Adapters, des nichtlinearen Modifizierers des Adapters durch Weitergabe von Trainingsdaten spezifisch für die Bilddatenverarbeitungs-Task durch das Basismodell und den Adapter sowie Aktualisierung von Gewichtungen des nichtlinearen Modifizierers des Adapters für gegebene Gewichtungen des Basismodells, um eine Verlustfunktion zu optimieren,
wobei der nichtlineare Modifizierer mehrere Pfade enthält, die durch mehrere KI-Architekturen zur Datentransformation gebildet werden, wobei jeder der Pfade entweder ein linearer Pfad ist, der konfiguriert ist, die empfangenen Daten linear zu modifizieren, oder ein nichtlinearer Pfad ist, der konfiguriert ist, die empfangenen Daten nichtlinear zu modifizieren, wobei eine KI-Architektur des linearen Pfades die empfangenen Daten unter Verwendung einer oder mehrerer Gewichtungsmatrizen linear modifiziert, wobei eine KI-Architektur des nichtlinearen Pfades die empfangenen Daten unter Verwendung einer oder mehrerer Gewichtungsmatrizen linear modifiziert und die empfangenen Daten unter Verwendung einer oder mehrerer nichtlinearer Funktionen nichtlinear modifiziert, und wobei der nichtlineare Modifizierer zumindest einen nichtlinearen Pfad enthält.

14. Verfahren nach Anspruch 13, wobei der KI-Trainer ferner einen Gewichtungs-Konstruktor enthält, der einen Pool von Parametern und einen Satz von Hyperparametern enthält, welche Regeln für die Weitergabe der Parameter aus dem Pool von Parametern in die Gewichtungsmatrizen der mehreren Pfade des nichtlinearen Modifizierers bilden, wobei das Verfahren ferner umfasst:
Aktualisieren, unter Verwendung des Gewichtungs-Konstruktors, des Pools von Parametern und des Satzes von Hyperparametern für gegebene Gewichtungen des Basismodells; und
Weitergeben, unter Verwendung des Gewichtungs-Konstruktors, der Parameter aus dem Pool von Parametern an verschiedene Gewichtungsmatrizen verschiedener Pfade gemäß den trainierten Hyperparametern.

15. Nichtflüchtiges, computerlesbares Speichermedium, in dem ein Programm enthalten ist, das von einem Prozessor ausführbar ist, um ein Verfahren nach Anspruch 13 oder 14 durchzuführen.

## Revendications

1. Un système d'intelligence artificielle (IA) (102) comprenant un adaptateur (106) destiné à un modèle de base (104) du système d'IA (102), l'adaptateur comprenant :
un connecteur (108) configuré pour connecter l'adaptateur au modèle de base de telle sorte que, pendant une opération du système d'IA, le modèle de base reçoit des données d'entrée comprenant un ensemble de données d'image, et au moins une partie des données d'entrée transformées par le modèle de base est propagée du modèle de base vers l'adaptateur et de retour de l'adaptateur vers le modèle de base, dans lequel le modèle de base est configuré pour utiliser le transformeur de vision (ViT) pour une tâche de traitement de données d'image ;
un modificateur non linéaire (110) configuré pour modifier de manière non linéaire les données reçues du modèle de base avant de renvoyer la partie modifiée des données au modèle de base ; et
un entraîneur d'IA (112) configuré pour régler le modificateur non linéaire de l'adaptateur en propageant des données d'entraînement (204) spécifiques à la tâche de traitement de données d'image à travers le modèle de base et l'adaptateur et en mettant à jour des poids du modificateur non linéaire de l'adaptateur pour des poids donnés du modèle de base afin d'optimiser une fonction de perte (202),
dans lequel le modificateur non linéaire comprend de multiples chemins (306, 310) formés par de multiples architectures d'IA de transformation de données, chacun des chemins étant soit un chemin linéaire (310) configuré pour modifier linéairement les données reçues, soit un chemin non linéaire (306) configuré pour modifier de manière non linéaire les données reçues, dans lequel une architecture d'IA du chemin linéaire modifie linéairement les données reçues en utilisant une ou plusieurs matrices de poids, dans lequel une architecture d'IA du chemin non linéaire modifie linéairement les données reçues en utilisant une ou plusieurs matrices de poids et modifie de manière non linéaire les données reçues en utilisant une ou plusieurs fonctions non linéaires, et dans lequel le modificateur non linéaire comprend au moins un chemin non linéaire.

2. Le système selon la revendication 1, dans lequel le modificateur non linéaire comprend de multiples chemins non linéaires utilisant différentes fonctions non linéaires, différents agencements des mêmes fonctions non linéaires par rapport aux matrices de poids, ou les deux.

3. Le système selon la revendication 2, dans lequel le modificateur non linéaire comprend au moins un chemin linéaire, ou
dans lequel les multiples chemins non linéaires comprennent les mêmes matrices de poids.

4. Le système selon la revendication 2, dans lequel les multiples chemins non linéaires partagent au moins certains poids, ou
dans lequel des poids dans les matrices de poids des multiples chemins non linéaires proviennent d'un ensemble commun de paramètres, de telle sorte que, pour régler le modificateur non linéaire, l'entraîneur d'IA met à jour l'ensemble commun de paramètres.

5. Le système selon l'une quelconque des revendications 1 à 4, dans lequel le modificateur non linéaire comprend :
un séparateur de chemins configuré pour diriger les données reçues vers chacun des multiples chemins ; et
un combineur de chemins configuré pour combiner les sorties de chacun des multiples chemins afin de soumettre une sortie combinée de retour au modèle de base.

6. Le système selon la revendication 5, dans lequel le combineur de chemins combine les sorties en utilisant une opération comprenant l'une ou une combinaison parmi : une identité, une duplication, une permutation, un développement en base polynomiale, un développement en base de Fourier, une addition, une multiplication, une division, une soustraction, une addition modulo, un produit modulo, un produit de Kronecker, une somme de Kronecker, un produit de Hadamard, une concaténation, un log-sum-exp, une transformation affine, une convolution, une randomisation, une normalisation, une opération d'activation non linéaire, et des variantes de celles-ci,
éventuellement dans lequel l'opération du combineur de chemins comprend un paramètre appris pendant le réglage de l'entraîneur d'IA.

7. Le système selon l'une quelconque des revendications 1 à 6, dans lequel l'architecture d'IA du chemin non linéaire comprend une configuration en goulot d'étranglement de multiples couches.

8. Le système selon l'une quelconque des revendications 1 à 7, dans lequel l'entraîneur d'IA est en outre configuré pour approximer le modèle de base et entraîner l'adaptateur et pour atteindre un objectif commun.

9. Le système selon l'une quelconque des revendications 1 à 8, dans lequel l'entraîneur d'IA comprend en outre un constructeur de poids comprenant un ensemble de paramètres et un ensemble d'hyperparamètres formant des règles de propagation des paramètres depuis l'ensemble de paramètres jusque dans les matrices de poids des multiples chemins du modificateur non linéaire, et dans lequel le constructeur de poids est configuré pour :
mettre à jour l'ensemble de paramètres et l'ensemble d'hyperparamètres pour des poids donnés du modèle de base ; et
propager les paramètres depuis l'ensemble de paramètres vers différentes matrices de poids de différents chemins selon les hyperparamètres entraînés.

10. Le système selon l'une quelconque des revendications 1 à 9, dans lequel l'entraîneur d'IA met à jour des poids de l'adaptateur pour des poids gelés du modèle de base.

11. Le système selon l'une quelconque des revendications 1 à 10, dans lequel les matrices de poids de l'adaptateur ont des dimensions inférieures à celles des matrices de poids du modèle de base.

12. Le système selon l'une quelconque des revendications 1 à 11, dans lequel les matrices de poids de l'adaptateur proviennent d'un ensemble de paramètres mis à jour par l'entraîneur d'IA pendant le réglage, et dans lequel un nombre de paramètres dans l'ensemble de paramètres est plus de 1000 fois inférieur à un nombre de paramètres du modèle de base.

13. Un procédé mis en œuvre par ordinateur pour adapter un modèle de base d'un système d'intelligence artificielle (IA) en utilisant un adaptateur, le procédé comprenant :
la connexion (602), en utilisant un connecteur de l'adaptateur, de l'adaptateur au modèle de base de telle sorte que, pendant une opération du système d'IA, le modèle de base reçoit des données d'entrée comprenant un ensemble de données d'image, et au moins une partie des données d'entrée transformées par le modèle de base est propagée du modèle de base vers l'adaptateur et de retour de l'adaptateur vers le modèle de base, dans lequel le modèle de base est configuré pour utiliser le transformeur de vision (ViT) pour une tâche de traitement de données d'image ;
la modification (606), en utilisant un modificateur non linéaire de l'adaptateur, de manière non linéaire, des données reçues du modèle de base avant de renvoyer la partie modifiée des données au modèle de base ; et
le réglage (604), en utilisant un entraîneur d'IA de l'adaptateur, du modificateur non linéaire de l'adaptateur en propageant des données d'entraînement spécifiques à la tâche de traitement de données d'image à travers le modèle de base et l'adaptateur et en mettant à jour des poids du modificateur non linéaire de l'adaptateur pour des poids donnés du modèle de base afin d'optimiser une fonction de perte,
dans lequel le modificateur non linéaire comprend de multiples chemins formés par de multiples architectures d'IA de transformation de données, chacun des chemins étant soit un chemin linéaire configuré pour modifier linéairement les données reçues, soit un chemin non linéaire configuré pour modifier de manière non linéaire les données reçues, dans lequel une architecture d'IA du chemin linéaire modifie linéairement les données reçues en utilisant une ou plusieurs matrices de poids, dans lequel une architecture d'IA du chemin non linéaire modifie linéairement les données reçues en utilisant une ou plusieurs matrices de poids et modifie de manière non linéaire les données reçues en utilisant une ou plusieurs fonctions non linéaires, et dans lequel le modificateur non linéaire comprend au moins un chemin non linéaire.

14. Le procédé selon la revendication 13, dans lequel l'entraîneur d'IA comprend en outre un constructeur de poids comprenant un ensemble de paramètres et un ensemble d'hyperparamètres formant des règles de propagation des paramètres depuis l'ensemble de paramètres jusque dans les matrices de poids des multiples chemins du modificateur non linéaire, et dans lequel le procédé comprend en outre :
la mise à jour, en utilisant le constructeur de poids, de l'ensemble de paramètres et de l'ensemble d'hyperparamètres pour des poids donnés du modèle de base ; et
la propagation, en utilisant le constructeur de poids, des paramètres depuis l'ensemble de paramètres vers différentes matrices de poids de différents chemins selon les hyperparamètres entraînés.

15. Un support de stockage lisible par ordinateur non transitoire sur lequel est incorporé un programme exécutable par un processeur pour effectuer le procédé selon la revendication 13 ou 14.
